# EUROPÄISCHE PATENTSCHRIFT

(11) **EP 4 069 528 B1**
(45) Veröffentlichungstag und Bekanntmachung des Hinweises auf die Patenterteilung: **21.08.2024**
(21) Anmeldenummer: 20819727.7
(22) Anmeldetag: 03.12.2020
(51) Int. Cl.: B60C 23/00, B60C 23/04, B60C 29/00, B60C 29/02, B60C 29/04

(54) **VORRICHTUNG ZUM MESSEN DES LUFTDRUCKS IM INNEREN EINES ZWEIRADREIFENS UND ANORDNUNG**
APPARATUS FOR MEASURING THE AIR PRESSURE IN THE INTERIOR OF A BICYCLE TIRE AND ARRANGEMENT
APPAREIL POUR MESURER LA PRESSION D'AIR À L'INTÉRIEUR D'UN PNEU DE BICYCLETTE ET AGENCEMENT

(30) Priorität: 06.12.2019 DE 102019219114
(43) Veröffentlichungstag der Anmeldung: 12.10.2022
(73) Patentinhaber: Ralf Bohle GmbH, 51580 Reichshof (DE)
(72) Erfinder: HACHMEYER, Markus, 51674 Wiehl (DE); LAMBERTZ, Marcus, 51789 Lindlar (DE); OCHMANN, Sascha, 51580 Reichshof (DE)
(74) Vertreter: Patentanwälte Ruff, Wilhelm, Beier, Dauster & Partner mbB
(86) Internationale Anmeldenummer: PCT/EP2020/084476
(87) Internationale Veröffentlichungsnummer: WO 2021/110839

(56) Entgegenhaltungen:
- DE-A1- 10 202 739
- US-A1- 2019 001 763

## Beschreibung

Die Erfindung betrifft eine Vorrichtung zum Messen des Luftdrucks im Inneren eines Zweiradreifens, der auf einer Felge montiert ist, mit einem Gehäuse, einem Sensor und einem Zusatzventilschaft, wobei der Zusatzventilschaft zum Befestigen an dem Ventilschaft vorgesehen ist. Die Erfindung betrifft auch eine Anordnung mit einer erfindungsgemäßen Vorrichtung zum Messen des Luftdrucks und einem auf einer Felge montierten Zweiradreifen. Reifendruckkontrollsysteme (TPMS) sind bekannt und im Automotive-Bereich weit verbreitet. Ein Problem bei der Anwendung von Reifendruckkontrollsystemen bei Fahrrädern und E-Bikes ist, dass Reifendruckkontrollsysteme sehr klein und leicht sein müssen. Die Anbringung innerhalb des Reifens, beispielsweise im Felgentiefbett, vergleichbar zu Systemen im Automotive-Bereich, ist etwa aus Gründen fehlenden Platzes, der Bruchsicherheit sowie bei Nutzung von klassischen Fahrradschläuchen nicht möglich. Ein Reifendruckkontrollsystem für Fahrräder und E-Bikes muss entsprechend außen an der Felge angebracht werden. Dies kann zu einer Unwucht des Laufrads führen, da bekannte Reifendruckkontrollsysteme zu schwer sind. Darüber hinaus gibt es zahlreiche, unterschiedliche Ausformungen von Felgen, die das Anbringen eines Reifendruckkontrollsystems erschweren. Es gibt unterschiedlich hohe Felgen und unterschiedlich lange Ventile, die ebenfalls eine Anbringung erschweren. Es gibt darüber hinaus unterschiedliche Ventilarten, die eine Verbindung mit einem externen Reifendruckkontrollsystem erschweren. Die Probleme beim Anbringen können unter Umständen dazu führen, dass sich Reifendruckkontrollsysteme für Fahrräder und E-Bikes verwinden und eventuell sogar abbrechen. Auch der bei Fahrrädern und E-Bikes geringe Speichenabstand spielt eine wichtige Rolle, da der geringe Speichenabstand die mögliche Größe eines Reifendruckkontrollsystems für Fahrräder und E-Bikes maßgeblich einschränkt.

US 2019/0001763 A1 beschreibt eine Vorrichtung zum Messen des Luftdrucks im Inneren eines Zweiradreifens. Diese Vorrichtung weist ein Gehäuse mit einem Sensor auf und ist an einer Felge montiert.

Mit der Erfindung soll eine Vorrichtung zum Messen des Luftdrucks im Inneren eines Zweiradreifens und eine Anordnung mit einer erfindungsgemäßen Vorrichtung verbessert werden.

Erfindungsgemäß ist hierzu eine Vorrichtung zum Messen des Luftdrucks mit den Merkmalen von Anspruch 1 und eine Anordnung mit den Merkmalen von Anspruch 11 vorgesehen. Vorteilhafte Weiterbildungen der Erfindung sind in den Unteransprüchen angegeben.

Die erfindungsgemäße Vorrichtung zum Messen des Luftdrucks im Inneren eines Zweiradreifens, der auf einer Felge montiert ist, weist ein Gehäuse, einen Sensor und einen Zusatzventilschaft auf, wobei der Zusatzventilschaft zum Befestigen an einem Ventilschaft des Zweiradreifens vorgesehen ist, bei der das Gehäuse eine Durchgangsöffnung zum Durchführen eines Ventilschafts des Zweiradreifens aufweist, wobei das Gehäuse und der Zusatzventilschaft so ausgebildet und angeordnet sind, dass sich der Ventilschaft durch die Durchgangsöffnung des Gehäuses hindurcherstreckt und dass im Bereich der Durchgangsöffnung des Gehäuses eine Dichtung vorgesehen ist, um zwischen dem Gehäuse und dem Ventilschaft eine Abdichtung bereitzustellen, und dass die Dichtung ausgebildet ist, im Bereich eines Außengewindes des Ventilschafts an dem Ventilschaft anzuliegen.

Indem sich der Ventilschaft durch die Durchgangsöffnung des Gehäuses hindurch erstrecken kann und im Bereich der Durchgangsöffnung des Gehäuses eine Dichtung vorgesehen ist, um zwischen dem Gehäuse und dem Ventilschaft eine Abdichtung bereitzustellen, ist ein Anbringen auch an unterschiedlichen Felgentypen und unterschiedlichen Ventiltypen problemlos möglich. Denn unabhängig von der Länge des Ventilschafts, die über den radial innen liegenden, der Nabe zugewandten Bereich der Felge hinausragt, kann das Gehäuse im Wesentlichen beliebig entlang dem Ventilschaft platziert werden. Die Dichtung im Bereich der Durchgangsöffnung des Gehäuses sorgt für eine zuverlässige Abdichtung zwischen dem Gehäuse und dem Ventilschaft. Das Gehäuse kann daher anliegend an die Felge oder auch nur geringfügig beabstandet von der Felge platziert werden, da unabhängig von der Position des Gehäuses entlang dem Ventilschaft immer eine zuverlässige Abdichtung bereitgestellt werden kann. Durch Vorsehen einer Durchgangsöffnung im Gehäuse, durch die sich der Ventilschaft hindurcherstreckt, ist es möglich, unabhängig von der Länge des Ventilschafts und der Ausbildung der Felge sicherzustellen, dass das Gehäuse der Vorrichtung zum Messen des Luftdrucks an der Felge anliegt oder nur einen sehr geringen Abstand zur Felge hat. Dadurch kann das Gehäuse sicher fixiert werden und eine größere Unwucht der Fahrradfelge wird vermieden. Felgentyp und Felgenform sowie Ventillänge und Ventilart spielen dadurch keine Rolle mehr in Bezug auf die Positionierung des Gehäuses anliegend an der Felge. Mittels des Zusatzventilschafts wird eine Strömungsverbindung zwischen dem offenen Ende des Ventilschafts und dem Gehäuse bereitgestellt, so dass also ein Sensor in oder am Gehäuse einen Luftdruck am offenen Ende des Ventilschafts und damit im Inneren des Zweiradreifens erfassen kann. Indem sich der Ventilschaft durch die Durchgangsöffnung hindurcherstreckt, ist die erfindungsgemäße Vorrichtung sowohl für Schlauchreifen mit eingenähtem Schlauch und konventionelle Reifen mit Schlauch als auch schlauchlose Reifen, also Tube-Type-Anwendungen und Tubeless-Anwendungen, geeignet.

In Weiterbildung der Erfindung ist das Gehäuse, bezogen auf einen Bereich der Felge, in dem der Ventilschaft angeordnet ist, so ausgebildet und angeordnet, dass im montierten Zustand der Vorrichtung das Gehäuse wenigstens abschnittsweise an der Felge anliegt oder wenigstens abschnittsweise lediglich ein Spalt von 0,5 mm Höhe oder weniger, insbesondere 0,1 mm bis 0,2 mm, zwischen dem Gehäuse und der Felge liegt.

Beispielsweise liegt das Gehäuse im Bereich des kleinsten Radius der Felge an oder hat im Bereich des kleinsten Radius der Felge einen Spalt von 0,5 mm Höhe oder weniger, insbesondere 0,1 mm bis 0,2 mm, zwischen dem Gehäuse und der Felge.

Die direkte Auflage des Gehäuses auf der Felge oder ein sehr geringer Abstand zwischen Gehäuse und Felge bringt Vorteile in Bezug auf Verdrehsicherheit des Gehäuses, kompakte Optik und verbesserte Ventilstatik. Beim Aufpumpen des Reifens kann bei der erfindungsgemäßen Vorrichtung praktisch vollständig verhindert werden, dass der Ventilschaft versehentlich abgebrochen oder abgeknickt wird. Trotzdem die erfindungsgemäße Vorrichtung zum Messen des Luftdrucks an dem Ventilschaft angebracht ist, kann der Reifen dennoch problemlos aufgepumpt werden, auch mit einer Handpumpe. Beispielsweise kann auch gleichzeitig der Luftdruck gemessen und bepumpt werden. Da das Gehäuse an der Felge anliegt, kann in sehr einfacher Weise eine Verdrehsicherung des Gehäuses relativ zur Felge erreicht werden. Dies kann beispielsweise durch zwei voneinander beabstandete Vorsprünge an der Unterseite des Gehäuses erreicht werden, die dann beidseitig an der Felge anliegen. Wenigstens eine Unterseite des Gehäuses kann aus weichem Material, insbesondere weichem Kunststoff, gebildet sein. Das Gehäuse kann auch mit der Felge verklebt werden.

Gemäß der Erfindung ist im Bereich der Durchgangsöffnung des Gehäuses zwischen dem Gehäuse und dem Ventilschaft eine Dichtung vorgesehen. Die Dichtung liegt kann dabei im Bereich eines Außengewindes des Ventilschafts an dem Ventilschaft an. Die Dichtung kann eine innenliegende Gewindestruktur oder ein innenliegendes Gewinde aufweisen.

Auf diese Weise wird eine Abdichtung gegenüber dem Umfang des Ventilschafts und dem Gehäuse bereitgestellt. Dadurch ist es möglich, das Gehäuse unabhängig von einer Länge des Ventilschafts, speziell einer Länge des Ventilschafts, der in radialer Richtung nach innen über die Felge hinausragt, relativ zur Felge anzuordnen und gleichzeitig eine Abdichtung zwischen dem Außenumfang des Ventilschafts und dem Gehäuse bereitzustellen. Ein Luftkanal zwischen dem an oder im Gehäuse angeordneten Sensor und dem Inneren des Zweiradreifens kann dann über das offene Ende des Ventilschafts zum Gehäuse verlaufen. Üblicherweise sind Ventilschäfte mit einem Außengewinde versehen. In einem solchen Fall wird gemäß der Erfindung dann im Bereich des Außengewindes des Ventilschafts abgedichtet. Dies ist eine in technischer Hinsicht unübliche Lösung, die aber bei der erfindungsgemäßen Vorrichtung erhebliche Vorteile mit sich bringt. Die Abdichtung am Gewinde kann nämlich immer so vorgenommen werden, dass das Gehäuse anliegend an die Felge oder in sehr geringem Abstand zur Felge positioniert wird. Die erfindungsgemäße Vorrichtung kann auch an einem geschlitzten Ventilschaft angeordnet werden. Solche, an ihrem freien Ende geschlitzte Ventilschäfte werden bei Dunlopventilen verwendet. Da erfindungsgemäß die Abdichtung am Gewinde des Ventilschaftes vorgenommen wird, können durch das geschlitzte Ventilschaftende keine Undichtigkeiten auftreten. Mittels der Abdichtung am Gewinde kann auch eine Verdrehsicherung des Gehäuses gegenüber der Felge realisiert werden. Dies kann durch direkte Reibung zwischen einer Mutter auf dem Ventilschaft und dem Gehäuse oder indirekt über Reibung zwischen der Mutter und der Dichtung sowie Reibung zwischen der Dichtung und dem Gehäuse erreicht werden.

In Weiterbildung der Erfindung ist eine Mutter zum Aufschrauben oder eine Buchse zum Aufschieben auf den Ventilschaft vorgesehen, wobei im montierten Zustand der Vorrichtung zwischen der Mutter bzw. der Buchse und dem Gehäuse eine Dichtung angeordnet ist, die das Gehäuse im Bereich der Durchgangsöffnung zum Ventilschaft abdichtet.

Mittels einer Mutter oder einer Buchse kann eine stabile Auflage für eine Dichtung, beispielsweise einen Dichtring, geschaffen werden. Vorteilhaft wird die Dichtung bzw. ein Dichtring so angeordnet, dass gleichzeitig ein Dichteingriff mit dem Außenumfang des Ventilschafts, gegebenenfalls also mit dem Außengewinde des Ventilschafts, und mit einer geeigneten Dichtfläche am Gehäuse erzielt wird. Zur Mutter oder Buchse selbst hin ist lediglich eine Auflagefläche vorgesehen, die aber nicht notwendigerweise einen luftdichten Abschluss bereitstellen muss. Wesentlich ist, dass der Außenumfang des Ventilschafts gegenüber dem Gehäuse abgedichtet wird. Es ist vorteilhaft, den Außenumfang des Ventilschafts gegenüber dem Innenumfang der Durchgangsöffnung des Gehäuses abzudichten.

In Weiterbildung der Erfindung sitzt der Zusatzventilschaft im montierten Zustand der Vorrichtung auf dem Gehäuse auf, wobei zwischen dem Zusatzventilschaft und dem Gehäuse eine Dichtung angeordnet ist, die das Gehäuse zum Zusatzventilschaft abdichtet.

Mittels des Zusatzventilschafts kann dadurch ein Luftkanal zwischen dem offenen Ende des Ventilschafts und dem Gehäuse bereitgestellt werden. Am Zusatzventilschaft kann auch ein Ventil zum Befüllen des Zweiradreifens angeordnet sein. Ein Luftkanal zwischen dem Inneren des Zweiradreifens und einem Sensor im Gehäuse oder am Gehäuse verläuft dann durch den Ventilschaft, abschnittsweise durch den Zusatzventilschaft zum Gehäuse und innerhalb des Gehäuses zum Sensor. Ist beispielsweise der Ventilschaft mit einem Außengewinde versehen, können unterschiedliche Längen des Ventilschafts durch unterschiedlich weites Aufschrauben des Zusatzventilschafts auf den Ventilschaft ausgeglichen werden. Der Zusatzventilschaft wird so weit auf den Ventilschaft aufgeschraubt, bis eine Stirnfläche des Zusatzventilschafts auf dem Gehäuse aufliegt. Eine Dichtung zwischen dem Zusatzventilschaft und dem Gehäuse dichtet dann das Gehäuse zum Zusatzventilschaft ab. Eine Abdichtung zwischen dem Zusatzventilschaft und dem Gehäuse kann in axialer Richtung und/oder in radialer Richtung erfolgen, je nach Ausführung des Gehäuses. In axialer Richtung kann ein Dichtring in einer Stirnfläche des Zusatzventilschafts angeordnet sein und kann beim Aufschrauben des Zusatzventilschafts gegen das Gehäuse gedrückt werden. In radialer Richtung kann ein Dichtring am Umfang des Zusatzventilschafts angeordnet sein und schmiegt sich in radialer Richtung an das Gehäuse an.

In Weiterbildung der Erfindung weist der Zusatzventilschaft einen ersten Luftkanal auf, der sich im montierten Zustand der Vorrichtung vom offenen Ende des Ventilschafts bis zu einem Bereich des Zusatzventilschafts erstreckt, der im montierten Zustand der Vorrichtung an dem Gehäuse anliegt.

In einfacher Weise kann dadurch eine Strömungsverbindung vom Inneren des Zweiradreifens bzw. dem freien Ende des Ventilschafts zum Gehäuse bereitgestellt werden.

In Weiterbildung der Erfindung weist das Gehäuse einen zweiten Luftkanal auf, der im montierten Zustand der Vorrichtung in Strömungsverbindung mit dem ersten Luftkanal steht.

Eine Strömungsverbindung zwischen dem Sensor und dem Inneren des Zweiradreifens wird infolgedessen über den ersten und den zweiten Luftkanal bereitgestellt. Dies hat den Vorteil, dass das Gehäuse in einer Position angeordnet werden kann, in der es an der Felge anliegt oder nur geringfügig von der Felge beabstandet ist. Der Zusatzventilschaft wird dann so weit auf den Ventilschaft aufgeschoben oder aufgeschraubt, bis eine Stirnfläche des Zusatzventilschafts an dem Gehäuse anliegt und mit einer zwischengefügten Dichtung gleichzeitig eine Abdichtung zwischen Zusatzventilschaft und Gehäuse bereitgestellt ist. Die erfindungsgemäße Vorrichtung ist dadurch sehr flexibel und kann unabhängig von einer Länge des Ventilschafts und einer Ausbildung der Felge angebracht werden.

In Weiterbildung der Erfindung weist der Zusatzventilschaft ein Innengewinde zum Aufschrauben auf den Ventilschaft auf.

Auf diese Weise ist eine einfache und zuverlässige Anordnung des Zusatzventilschafts am Ventilschaft ermöglicht, die gleichzeitig erlaubt, den Zusatzventilschaft mehr oder weniger weit auf den Ventilschaft aufzuschrauben, bis eine Stirnfläche des Zusatzventilschafts an dem Gehäuse anliegt.

In Weiterbildung der Erfindung ist das Innengewinde des Zusatzventilschafts im Bereich des ersten Luftkanals unterbrochen.

Mittels einer Unterbrechung des Gewindes, beispielsweise durch Vorsehen einer in Längsrichtung durchgehenden Nut im Innengewinde, kann der erste Luftkanal in einfacher Weise bereitgestellt werden.

In Weiterbildung der Erfindung ist die Durchgangsöffnung im Gehäuse abschnittsweise kegelstumpfförmig ausgebildet, wobei sich die Durchgangsöffnung im Bereich der kegelstumpfförmigen Ausbildung zur Unterseite des Gehäuses hin erweitert, wobei die Unterseite des Gehäuses im montierten Zustand der Vorrichtung der Felge zugewandt ist.

Mittels eines kegelstumpfförmigen Abschnitts der Durchgangsöffnung kann ein Dichtsitz innerhalb der Durchgangsöffnung bereitgestellt werden. Ein in der Durchgangsöffnung angeordneter Dichtring wird dann mittels des kegelstumpfförmigen und sich zur Unterseite des Gehäuses, also zur Felge hin, erweiternden Bereichs gleichzeitig nach unten und innen, in Richtung auf den Außenumfang des Ventilschafts zu, gedrückt. Dadurch kann ein zuverlässiger Dichteingriff mit dem Außenumfang des Ventilschafts und insbesondere mit einem Außengewinde des Ventilschafts erzielt werden. Als besonders vorteilhaft hat sich ein Öffnungswinkel des kegelstumpfförmigen Abschnitts zwischen 45° und 55°, insbesondere 50°, herausgestellt. Der Kegelwinkel des kegelstumpfförmigen Abschnitts liegt dann zwischen 22,5° und 27,5°, insbesondere bei 25°.

In Weiterbildung der Erfindung ist die Durchgangsöffnung im Gehäuse als Stufenbohrung ausgebildet, um eine auf den Ventilschaft aufgeschraubte Mutter wenigstens abschnittsweise aufzunehmen und einen Dichtsitz für einen Dichtring zu bilden.

Mittels einer auf den Ventilschaft aufgeschraubten Mutter wird eine exakte Positionierung eines in der Durchgangsöffnung angeordneten Dichtrings erreicht. Die Mutter kann wenigstens abschnittsweise in der Durchgangsöffnung aufgenommen werden, so dass sichergestellt ist, dass eine Unterseite des Gehäuses wenigstens abschnittsweise an der Felge anliegt, oder dass eine Unterseite des Gehäuses im montierten Zustand 0,5 mm oder weniger, insbesondere 0,1 mm bis 0,2 mm, von der Oberseite der Felge beabstandet ist. Dadurch kann sichergestellt werden, dass die Dichtung zuverlässig zusammengedrückt wird und das Gehäuse kann relativ zur Felge praktisch nicht verkippt werden, jedenfalls nicht so weit, dass der Ventilschaft abbricht oder beschädigt wird.

In Weiterbildung der Erfindung weist der Zusatzventilschaft eine Dichtung in einer Stirnfläche auf, die im montierten Zustand der Vorrichtung auf einer Oberseite des Gehäuses aufliegt, wobei die Oberseite des Gehäuses im montierten Zustand der Vorrichtung der Felge abgewandt ist.

Eine Dichtung in einer Stirnfläche des Zusatzventilschafts erleichtert eine Abdichtung zwischen Zusatzventilschaft und Gehäuse. Der Zusatzventilschaft wird beispielsweise einfach so weit auf den Ventilschaft aufgeschraubt, bis seine Unterseite an einer Dichtfläche des Gehäuses anliegt.

In Weiterbildung der Erfindung ist der Sensor in dem Gehäuse angeordnet und der zweite Luftkanal steht mit dem Sensor in Strömungsverbindung.

Der Sensor kann dadurch geschützt in dem Gehäuse angeordnet werden. Gehäuse und Sensor können als Einheit hergestellt werden, so dass eine sehr leichte Ausführung von Gehäuse und Sensor möglich ist. Es ist vorteilhaft, in dem Gehäuse zusätzlich zum Sensor eine Auswerteelektronik anzuordnen. Weiter können in dem Gehäuse auch drahtlose Kommunikationsmittel angeordnet werden, um den mittels des Sensors gemessenen Luftdruck drahtlos auf eine Anzeigevorrichtung zu übertragen. Als Anzeigevorrichtung kann beispielsweise ein handelsübliches Smartphone verwendet werden. In dem Gehäuse können aber auch Anzeigevorrichtungen für den Luftdruck vorgesehen werden. Beim Aufpumpen des Reifens kann dadurch eine Manometerfunktion erfüllt werden. Beispielsweise können mehrere LEDs unterschiedlicher Farbe an dem Gehäuse angeordnet sein, so dass sie von außen her beim Befüllen des Reifens und gegebenenfalls sogar während des Fahrbetriebs sichtbar sind. Ein korrekter Luftdruck wird beispielsweise durch eine grüne LED angezeigt, ein noch sicher fahrbarer, aber vom Idealwert abweichender Luftdruck durch eine gelbe LED. Ist der Luftdruck zu niedrig, kann dies durch eine rote LED signalisiert werden. Eine rote LED kann auch bei Überschreiten des empfohlenen Luftdrucks leuchten und ein- und dieselbe LED kann auch für das Anzeigen eines zu niedrigen oder zu hohen Luftdrucks verwendet werden. Mittels der erfindungsgemäßen Vorrichtung ist eine Erfassung des Luftdrucks im Inneren des Zweiradreifens auch während der Fahrt möglich. In einem solchen Fall kann beispielsweise fortlaufend der Luftdruck erfasst und drahtlos an eine Anzeigevorrichtung am Zweirad übermittelt werden. Der Fahrer sieht dann an der Anzeigevorrichtung, beispielsweise an einem handelsüblichen Smartphone oder in der Anzeigevorrichtung eines E-Bikes, ob der Luftdruck seiner Reifen sich noch innerhalb eines vorgegebenen Bereichs bewegt oder zu niedrig, gegebenenfalls auch zu hoch, ist. Dadurch ist auch im Stand eine Manometerfunktion, beispielsweise beim Aufpumpen, realisierbar. Alternativ oder zusätzlich kann bei zu niedrigem oder zu hohem Luftdruck auch ein akustisches Signal ausgegeben werden, insbesondere ein tiefer Ton bei niedrigem Luftdruck und ein hoher Ton bei hohem Luftdruck. In dem Gehäuse kann selbstverständlich auch ein auswechselbarer Energiespeicher, bspw. eine Batterie, angeordnet werden.

Das der Erfindung zugrunde liegende Problem wird auch durch eine Anordnung mit einer Vorrichtung zum Messen des Luftdrucks und einem auf einer Felge montierten Zweiradreifen und einem Ventilschaft zum Befüllen des Zweiradreifens gelöst, wobei der Ventilschaft von einer radial innenliegenden Seite der Felge aus in radialer Richtung nach innen vorragt, wobei die Vorrichtung ein Gehäuse, einen Sensor und einen Zusatzventilschaft zum Befestigen an dem Ventilschaft aufweist, bei der das Gehäuse eine Durchgangsöffnung zum Durchführen des Ventilschafts aufweist, wobei das Gehäuse und der Zusatzventilschaft so ausgebildet und angeordnet sind, dass sich der Ventilschaft durch die Durchgangsöffnung des Gehäuses hindurcherstreckt und dass im Bereich der Durchgangsöffnung des Gehäuses zwischen dem Gehäuse und dem Ventilschaft eine Dichtung angeordnet ist.

In Weiterbildung der Erfindung ist das Gehäuse, bezogen auf einen Bereich der Felge, in dem der Ventilschaft angeordnet ist, so angeordnet, dass es im montierten Zustand wenigstens abschnittsweise an der Felge anliegt oder wenigstens abschnittsweise lediglich ein Spalt von 0,5 mm Höhe oder weniger, insbesondere 0,1 mm bis 0,2 mm, zwischen dem Gehäuse und der Felge liegt.

Indem das Gehäuse an der Felge anliegt, kann eine stabile Anordnung des Gehäuses erreicht werden. Das Gehäuse kann dabei flächig oder auch nur punktuell anliegen. Beispielsweise kann das Gehäuse lediglich so weit an der Felge anliegen, dass eine Verdrehsicherung des Gehäuses bereitgestellt ist. Unabhängig von der Länge des Ventilschafts wird dadurch eine definierte Position des Gehäuses sichergestellt. Auch dann, wenn lediglich ein Spalt von 0,5 mm Höhe oder weniger zwischen dem Gehäuse und der Felge liegt, kann eine stabile Anordnung des Gehäuses erreicht werden. Denn das Gehäuse kann dann nicht so weit verkippt werden, dass der Ventilschaft beschädigt oder verbogen wird. Vor allem beim Aufpumpen des Zweiradreifens wird dadurch eine Beschädigung des Ventilschafts vollständig vermieden. In einer Position des Gehäuses, in der es wenigstens abschnittsweise an der Felge anliegt oder nur ein kleiner Spalt zwischen Gehäuse und Felge liegt, steht für die Unterbringung des Gehäuses auch am meisten Platz zur Verfügung. Dies ergibt sich aufgrund der radialen Anordnung von Speichen an Zweiradfelgen. Die sichere Fixierung oder Abstützung des Gehäuses an der Felge verhindert auch ein Brechen oder Abbiegen des Ventilschafts beim Aufpumpen. Das Gehäuse kann an seiner Unterseite, mit der es an der Felge anliegt, ein weiches Material, insbesondere ein weiches Kunststoffmaterial, aufweisen, so dass das Gehäuse mittels einer hohen Haftreibung gegen Verdrehen oder Verschieben an der Felge gesichert ist. Das Gehäuse kann auch mit der Felge verklebt werden.

In Weiterbildung der Erfindung umgibt die Durchgangsöffnung im Gehäuse den Ventilschaft unmittelbar. Dadurch kann zwischen dem Außenumfang des Ventilschafts und dem Innenumfang der Durchgangsöffnung eine Luftkammer geschaffen werden, von der aus ein Luftkanal in das Gehäuse und dann zum Sensor führt. Auf der anderen Seite ist eine solche Luftkammer dann mit dem Inneren des Zweiradreifens verbindbar, um mit dem Sensor einen Luftdruck im Inneren des Zweiradreifens erfassen zu können.

In Weiterbildung der Erfindung ist ein Zwischenraum zwischen einem Außenumfang des Ventilschafts und der Durchgangsöffnung des Gehäuses wenigstens abschnittsweise gegen die Umgebung abgedichtet.

Überraschenderweise lässt sich mittels eines Dichtrings zwischen dem Innenumfang und der Durchgangsöffnung und dem Außenumfang des Ventilschafts eine zuverlässige Abdichtung auch gegenüber hohen Innendrücken eines Zweiradreifens erreichen. Speziell kann auch eine zuverlässige Abdichtung gegenüber einem Außengewinde des Ventilschafts bereitgestellt werden. Eine Abdichtung gegenüber dem Außenumfang des Ventilschafts ermöglicht es, das Gehäuse auf den Ventilschaft aufzuschieben und in einer Position am Ventilschaft zu fixieren, in der das Gehäuse wenigstens abschnittsweise an der Felge anliegt oder nur ein kleiner Spalt zwischen Gehäuse und Felge liegt. Ein speziell vorbereiteter Dichtsitz am Ventilschaft ist hierzu nicht erforderlich, da mittels des Dichtrings eine zuverlässige Abdichtung zwischen dem Innenumfang der Durchgangsöffnung und dem Außenumfang des Ventilschafts erreicht werden kann.

In Weiterbildung der Erfindung ist auf den Ventilschaft eine Mutter aufgeschraubt oder eine Buchse aufgeschoben und ein Dichtring ist zwischen dem Gehäuse und der Mutter bzw. der Buchse angeordnet.

Eine Mutter oder Buchse kann eine Position des Dichtrings festlegen, muss aber lediglich einen Positionieranschlag für den Dichtring bereitstellen. Ein Dichtsitz ist an der Mutter oder Buchse nicht erforderlich, da der Dichtring einerseits dichtend an dem Außenumfang des Ventilschafts und andererseits dichtend am Innenumfang der Durchgangsöffnung des Gehäuses anliegt.

In Weiterbildung der Erfindung ist das Gehäuse mittels des am Ventilschaft befestigten Zusatzventilschafts gegen die Mutter oder die Buchse vorgespannt.

Auf diese Weise kann die für eine zuverlässige Dichtwirkung des Dichtrings erforderliche Vorspannkraft aufgebracht werden.

In Weiterbildung der Erfindung ist ein Innenumfang der Durchgangsöffnung wenigstens abschnittsweise kegelstumpfförmig und erweitert sich in Richtung auf die Felge hin.

Auf diese Weise kann ein Dichtsitz im Bereich des Innenumfangs der Durchgangsöffnung bereitgestellt werden.

In Weiterbildung der Erfindung ist zwischen dem Zusatzventilschaft und dem Gehäuse ein Dichtring vorgesehen.

In Weiterbildung der Erfindung weist der Zusatzventilschaft einen ersten Luftkanal auf, der sich von einem offenen Ende des Ventilschafts bis zu dem Gehäuse erstreckt.

In Weiterbildung der Erfindung erstreckt sich der erste Luftkanal bis zu einem Zwischenraum zwischen dem Ventilschaft und der Durchgangsöffnung des Gehäuses.

In Weiterbildung der Erfindung weist das Gehäuse einen zweiten Luftkanal auf, der von einem Zwischenraum zwischen dem Ventilschaft und der Durchgangsöffnung des Gehäuses ausgeht.

In Weiterbildung der Erfindung weist der Ventilschaft ein Außengewinde auf und der Zusatzventilschaft weist ein Innengewinde auf und ist auf den Ventilschaft aufgeschraubt.

In Weiterbildung der Erfindung steht der Sensor mittels eines zweiten Luftkanals im Gehäuse mit einem Zwischenraum zwischen der Durchgangsöffnung im Gehäuse und dem Ventilschaft in Strömungsverbindung und der Zwischenraum steht mittels eines ersten Luftkanals im Zusatzventilschaft mit einem offenen Ende des Ventilschafts und damit dem Innenraum des Zweiradreifens in Strömungsverbindung.

Weitere Merkmale und Vorteile der Erfindung ergeben sich aus den Ansprüchen und der Beschreibung bevorzugter Ausführungsformen im Zusammenhang mit den Zeichnungen. Einzelmerkmale aus der Beschreibung oder den Zeichnungen lassen sich dabei in beliebiger Weise mit anderen Einzelmerkmalen kombinieren, ohne den Rahmen der Erfindung zu überschreiten. Dies gilt auch für die Kombination von Einzelmerkmalen ohne weitere Einzelmerkmale, mit denen sie im Zusammenhang beschrieben oder dargestellt sind. In den Zeichnungen zeigen:
- Fig. 1: eine abschnittsweise Darstellung einer erfindungsgemäßen Anordnung mit einer Vorrichtung zum Messen des Luftdrucks im Inneren eines Zweiradreifens gemäß einer ersten Ausführungsform,
- Fig. 2: eine Ansicht auf die Schnittebene A-A in Fig. 1,
- Fig. 3: eine Ansicht auf die Schnittebene B-B in Fig. 2,
- Fig. 4: eine Schnittansicht des Zusatzventilschafts aus Fig. 1,
- Fig. 5: eine Ansicht des Zusatzventilschafts der Fig. 4 von unten,
- Fig. 6: eine Teilschnittansicht einer erfindungsgemäßen Vorrichtung zum Messen des Luftdrucks gemäß einer zweiten Ausführungsform,
- Fig. 7: eine abschnittsweise Darstellung einer erfindungsgemäßen Anordnung gemäß einer dritten Ausführungsform von der Seite,
- Fig. 8: die abschnittsweise dargestellte Anordnung der Fig. 7 von schräg vorne
- Fig. 9: eine Schnittansicht der Anordnung der Fig. 7,
- Fig. 10: eine vergrößerte Einzelheit der Schnittansicht der Fig. 8,
- Fig. 11: eine Schnittansicht des Gehäuses und des Zusatzventilschafts der Anordnung der Fig. 7,
- Fig. 12: eine Schnittansicht des Zusatzventilschafts aus Fig. 10,
- Fig. 13: eine Ansicht des Zusatzventilschafts der Anordnung der Fig. 7 von schräg unten und
- Fig. 14: eine Schnittansicht des Gehäuses der Fig. 7

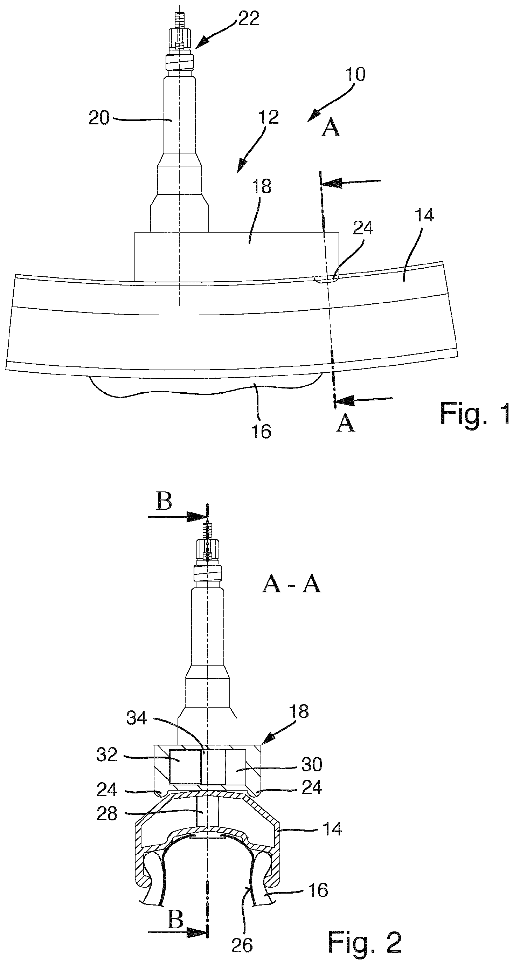

Fig. 1 zeigt eine erfindungsgemäße Anordnung 10 mit einer Felge 14 sowie einem auf der Felge 14 montierten und lediglich schematisch und abschnittsweise angedeuteten Zweiradreifen 16. Ein Innenraum des Zweiradreifens wird einerseits durch den Zweiradreifen 16 selbst und andererseits durch die Felge 14 begrenzt.

In diesen Innenraum des Zweiradreifens kann ein Schlauch eingelegt sein, dessen Ventilschaft in Fig. 1 nicht erkennbar ist, wobei der Ventilschaft durch eine Bohrung in der Felge 14 dann herausgeführt ist. In einem solchen Fall liegt eine sogenannte Tube-Type-Anwendung vor, mit anderen Worten wird ein zusätzlicher Schlauch im Inneren des Fahrradreifens angeordnet.

Liegt eine sogenannte Tubeless-Anwendung vor, wird der Innenraum des Zweiradreifens 16 einerseits durch die Innenseite der Reifenkarkasse des Zweiradreifens 16 und andererseits durch die Innenseite der Felge 14 definiert. Ein Ventilschaft ist in diesem Fall ebenfalls durch eine Bohrung in der Felge hindurchgeführt, wird aber luftdicht in der Bohrung der Felge angeordnet.

Zum Messen des Luftdrucks im Inneren des Zweiradreifens ist eine erfindungsgemäße Vorrichtung 12 zum Messen des Luftdrucks vorgesehen. Wie ausgeführt wurde, ist damit gemeint, dass der Luftdruck im Innenraum eines Schlauchs in dem Zweiradreifen 16 oder der Luftdruck im Innenraum des Zweiradreifens 16 selbst, wenn also kein Schlauch eingelegt ist, gemessen wird. Die Vorrichtung 12 weist ein Gehäuse 18 mit einem in Fig. 1 nicht erkennbaren Luftdrucksensor und einen Zusatzventilschaft 20 auf. Der Zusatzventilschaft 20 sitzt mit einer unteren Stirnfläche auf einer Oberseite des Gehäuses 18 auf. In eine Oberseite des Zusatzventilschafts 20 ist ein handelsübliches Ventil 22 eingesetzt. Der in Fig. 1 nicht dargestellte Ventilschaft ist hingegen nicht mehr mit einem Ventil versehen. Beispielsweise wird das Ventil 22 vor dem Aufsetzen der erfindungsgemäßen Vorrichtung 12 aus dem Ventilschaft herausgeschraubt und, wie in Fig. 1 erkennbar ist, in den Ventilschaft 20 eingeschraubt.

Es ist bereits in Fig. 1 zu erkennen, dass das Gehäuse 18 mit seiner Unterseite an der Felge 14 anliegt. Dadurch ist eine definierte Position des Gehäuses 18 bereitgestellt. Durch das an der Felge 14 anliegende Gehäuse 18 und den an einer Oberseite des Gehäuses 18 anliegenden Zusatzventilschaft 20 wird eine sehr stabile und sicher fixierte Positionierung der Vorrichtung 12 bereitgestellt. Im Rahmen der Erfindung kann auch ein kleiner Spalt von 0,5mm Höhe oder weniger zwischen der Felge 14 und dem Gehäuse 18 liegen.

Das Gehäuse 18 weist darüber hinaus an seiner Unterseite zwei Vorsprünge 24 auf, die, vgl. Fig. 2, sich aus der Unterseite des Gehäuses 18 herauserstrecken und seitlich an der Felge 14 anliegen. Mittels der Vorsprünge 24 wird eine Verdrehsicherung des Gehäuses 18 relativ zur Felge 14 erreicht.

Fig. 2 zeigt eine Ansicht auf die Schnittebene A-A in Fig. 1. Der Zweiradreifen 16 ist wieder nur abschnittsweise und schematisch dargestellt. Innerhalb des Zweiradreifens 16 ist ein ebenfalls nur abschnittsweise und schematisch dargestellter Schlauch 26 dargestellt, dessen Ventilschaft 28 abschnittsweise durch eine Hohlkammer der Felge 14 erkennbar ist. Mit der erfindungsgemäßen Vorrichtung soll ein Luftdruck innerhalb des Schlauchs 26 gemessen werden. Bei einer Tubeless-Anwendung entfällt der Schlauch 26 und ein Luftdruck wird dann innerhalb des Zweiradreifens 16 gemessen.

Das Gehäuse 18 liegt, wie bereits anhand der Fig. 1 erläutert wurde, abschnittsweise mit seiner Unterseite auf einer radial innenliegenden Innenseite der Felge 14 auf und die Vorsprünge 24 greifen seitlich an der Felge 14 an und sichern das Gehäuse 18 dadurch gegen eine Verdrehung relativ zur Felge 14.

Im Inneren des Gehäuses 18 ist ein Hohlraum 30 dargestellt. In dem Hohlraum 30 ist ein Sensor 32 zum Messen eines Luftdrucks angeordnet, der lediglich schematisch dargestellt ist. Darüber hinaus ist in dem Hohlraum 30 eine Auswerte- und Kommunikationselektronik 34 angeordnet. Mittels der Auswerte- und Kommunikationselektronik 34 werden die Signale des Sensors 32 ausgewertet und beispielsweise in einen Luftdruck umgerechnet. In der Auswerte- und Kommunikationselektronik 34 kann auch eine Bewertung des gemessenen Luftdrucks erfolgen, beispielsweise indem der gemessen Luftdruck mit Sollwerten verglichen wird. Der gemessene Luftdruck oder auch die Bewertung des gemessenen Luftdrucks können dann drahtlos an eine Anzeigevorrichtung übermittelt werden, beispielsweise die Anzeigevorrichtung am Lenker eines E-Bikes oder an ein handelsübliches Smartphone, das ein Fahrradfahrer bei sich trägt oder das er am Fahrrad befestigt hat. Mit dem Sensor 32 und/oder weiteren Sensoren kann beispielsweise auch eine Umgebungstemperatur, eine Spannung einer Batterie oder eines Akkus der Vorrichtung eine Geschwindigkeit des Zweirads und/oder eine Beschleunigung des Zweirads gemessen werden. Eine Übertragung der Daten des Sensors 32 kann mittels einer geeigneten Schnittstelle, gegebenenfalls drahtlos, erfolgen, beispielsweise mittels Bluetooth oder ANT+.

Im Rahmen der Erfindung kann in nicht dargestellter Weise auch das Gehäuse 18 selbst mit einer Anzeigevorrichtung versehen sein, beispielsweise mehreren LEDs in unterschiedlichen Farben. Ein zu niedriger Luftdruck kann beispielsweise mit einer ersten, roten LED angezeigt werden. Ein korrekter Luftdruck kann dahingegen mit einer grünen LED angezeigt werden. Liegt der Luftdruck nur geringfügig außerhalb eines empfohlenen Bereichs, kann eine gelbe LED aufleuchten. Ein zu hoher Luftdruck kann entweder mit einer zusätzlichen, weiteren LED oder durch Aufleuchten der LED angezeigt werden, die auch einen zu niedrigen Luftdruck anzeigt.

Schließlich kann in dem Hohlraum 30 des Gehäuses 18 auch noch ein Energiespeicher angeordnet sein, beispielsweise ein handelsüblicher und wechselbarer Akku oder eine Batterie oder ein geeigneter Superkondensator. Es ist im Rahmen der Erfindung aber auch möglich, Energie aus der Bewegung der Vorrichtung 12 während des Fahrbetriebs des Fahrrads oder E-Bikes zu gewinnen. Dies wird also sogenanntes Energy Harvesting bezeichnet. Daneben können beispielsweise auf einer Außenseite des Gehäuses 18 Solarzellen angeordnet sein oder Energie kann auch aus dem sich ändernden Luftdruck beim Aufpumpen des Reifens selbst gewonnen werden oder auch aus dem sich ändernden Luftdruck im Fahrbetrieb des Reifens. Beispielsweise können Piezoelemente zur Energiegewinnung eingesetzt werden.

Anhand der Fig. 1 und 2 ist bereits die sehr kompakte Ausführung der erfindungsgemäßen Vorrichtung 12 zu erkennen.

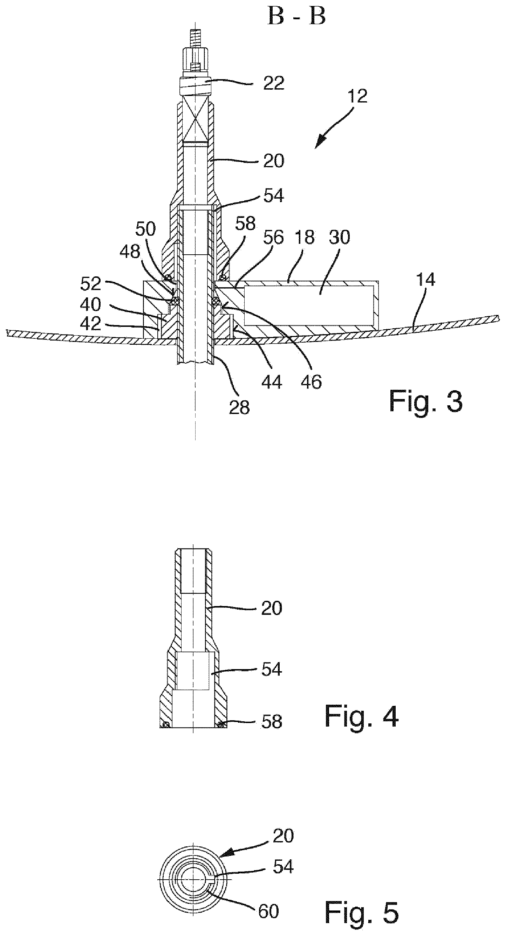

Fig. 3 zeigt eine Ansicht auf die Schnittebene B-B in Fig. 2. Der Ventilschaft 28 erstreckt sich ausgehend vom Inneren des in Fig. 3 nicht dargestellten Zweiradreifens 16 durch eine Bohrung in der Felge 14 hindurch. Der Ventilschaft 28 ist mit einem Außengewinde versehen. Auf das Außengewinde des Ventilschafts 28 ist eine Mutter 40 aufgeschraubt, wobei die Mutter 40 so weit aufgeschraubt ist, dass sie mit ihrer Unterseite auf einer Innenseite der Felge 14 aufliegt.

Das Gehäuse 18 ist mit einer Durchgangsöffnung 42 versehen. Die Durchgangsöffnung 42 ist als Stufenbohrung ausgebildet und nimmt bei der dargestellten Ausführungsform die Mutter 40 vollständig auf. Eine Unterseite des Gehäuses 18 kann dadurch auf der Innenseite der Felge 14 aufliegen, an der auch die Mutter 40 anliegt.

Die Durchgangsöffnung 42 ist, in Fig. 3 von unten nach oben gesehen, zunächst mit einem zylindrischen Bereich 44 versehen, dessen Innenumfang etwas größer ist als ein Außenumfang der Mutter 40. Eine Höhe des zylindrischen Bereichs 44 entspricht etwa der Höhe eines ersten Absatzes der Mutter 40. Auf diesen ersten Absatz der Mutter 40 liegt ein Absatz der Durchgangsöffnung 42 auf. Auf den zylindrischen Bereich 44 folgt ein zweiter zylindrischer Bereich 46, der einen kleineren Durchmesser hat als der erste zylindrische Bereich 44 und dessen Innendurchmesser geringfügig größer ist als ein Außendurchmesser der Mutter 40 in einem zweiten Bereich. Die Mutter 40 weist im Querschnitt somit eine Stufenform auf, wie auch die Durchgangsöffnung 42 vom ersten Abschnitt 44 zum zweiten Abschnitt 46. Das Gehäuse 18 ist dadurch mittels der Mutter 40 an einer Bewegung in Richtung auf die Felge 14 zu gehindert. Die Mutter 40 ist so bemessen und so weit auf den Ventilschaft 28 aufgeschraubt, dass dann, wenn die Mutter 40 an der Innenseite der Felge 14 anliegt, auch das Gehäuse 18 so weit auf den Ventilschaft 28 verschoben werden kann, dass das Gehäuse 18 an der Felge 14 anliegt.

Auf den zweiten Abschnitt 46 folgt ein kegelstumpfförmig ausgebildeter dritter Abschnitt 48 der Durchgangsöffnung 42. Der kegelstumpfförmige Abschnitt 48 erweitert sich in Richtung auf die Felge 14 zu, in Fig. 3 also nach unten. Ein Öffnungswinkel des kegelstumpfförmigen Abschnitts 48 beträgt 50°. Auf den kegelstumpfförmigen Abschnitt 48 folgt ein vierter Abschnitt 50, der wieder zylindrisch ausgebildet ist und dessen Innenumfang geringfügig größer ist als ein Außenumfang des Ventilschafts 28.

Im Bereich des kegelstumpfförmigen Abschnitts 48 ist in der Durchgangsöffnung 42 ein Dichtring 52 angeordnet. Der Dichtring 52 kann als handelsüblicher Dichtring ausgebildet sein und weist einen kreisförmigen Querschnitt auf. Der Dichtring kann beispielsweise auch eine innenliegende Gewindestruktur aufweisen, um eine besonders gute Abdichtung zum Ventilschaft 28 bereitzustellen. Der Dichtring 52 kann beispielsweise eine Härte im Bereich zwischen 60 Shore A und 80 Shore A, insbesondere 70 Shore A aufweisen. Der Dichtring kann beispielsweise aus Acrylnitril-Butadien-Kautschuk (NBR-Gummi) oder Nitrilgummi bestehen. Der Dichtring 52 liegt im dargestellten montierten Zustand der Vorrichtung 12 einerseits auf einer Oberseite der Mutter 40 auf. Dadurch wird der Dichtring 52 in der in Fig. 3 dargestellten Position gehalten und kann speziell nicht nach unten, also in Richtung auf die Felge 14 zu, ausweichen. Darüber hinaus liegt der kegelstumpfförmige Bereich 48 der Durchgangsöffnung 42 an dem Dichtring 52 an. Dadurch wird der Dichtring 52 nach unten und innen gedrückt. Nach unten wird eine Bewegung des Dichtrings durch die Oberseite der Mutter 40 begrenzt. Nach innen wird eine Bewegung des Dichtrings 52 durch den Außenumfang des Ventilschafts 28 begrenzt, der bei der dargestellten Ausführungsform mit einem Außengewinde versehen ist. Mittels des Dichtrings 52 wird dadurch der oberhalb des Dichtrings 52 liegende Abschnitt der Durchgangsöffnung 42 gegen den Außenumfang des Ventilschafts 28 abgedichtet. Oberhalb des Dichtrings 52 ist somit der Zwischenraum zwischen der Durchgangsöffnung 42 und dem Außenumfang des Ventilschafts 28 gegen die Umgebung abgedichtet.

Der Zusatzventilschaft 20 ist auf den Ventilschaft 28 aufgeschraubt und so weit nach unten, in Richtung auf die Felge 14, geschraubt, bis eine Stirnfläche des Zusatzventilschafts 20 auf einer Oberseite des Gehäuses 18 aufliegt. In der in Fig. 3 unteren Stirnfläche des Zusatzventilschafts 20 ist ein Dichtring 52 angeordnet. Dieser Dichtring sorgt für eine Abdichtung eines Innenraums des Zusatzventilschafts 20 gegen eine Oberseite des Gehäuses 18.

Das in Fig. 3 oben dargestellte Ende des Zusatzventilschafts 20 ist mit dem Ventil 22 versehen und infolgedessen, wenn das Ventil 22 geschlossen ist, gegen die Umgebung abgedichtet. Der Zusatzventilschaft 20 ist darüber hinaus mit einem ersten Luftkanal 54 versehen, der parallel zum Ventilschaft 28 verläuft und von einem in Fig. 3 oben dargestellten offenen Ende des Ventilschafts 28 bis zur Oberseite des Gehäuses 18 führt. Auf der anderen Seite erstreckt sich die Durchgangsöffnung 42 bis zur Oberseite des Gehäuses 18 und ein Zwischenraum zwischen einer Innenseite der Durchgangsöffnung 42 und einem Außenumfang des Ventilschafts 28 ist oberhalb des Dichtrings 52 gegen die Umgebung abgedichtet. Von diesem gegen die Umgebung abgedichteten Abschnitt des Zwischenraums zwischen der Durchgangsöffnung 42 und dem Ventilschaft 28 führt ein zweiter Luftkanal 56 im Gehäuse 18 in den Hohlraum 30 des Gehäuses 18.

Eine Strömungsverbindung vom Inneren des Zweiradreifens 16 zum Sensor 32, siehe Fig. 2, verläuft gemäß Fig. 3 somit über das Innere des Ventilschafts 28, den ersten Luftkanal 54 im Zusatzventilschaft 20, über den Abschnitt des Zwischenraums zwischen der Durchgangsöffnung 42 und dem Ventilschaft 28 oberhalb des Dichtrings 52 und durch den zweiten Luftkanal 56 in den Hohlraum 30 und zu dem im Hohlraum 30 angeordneten Sensor 32.

Indem mittels des Dichtrings 52 dabei eine Abdichtung zum Außengewinde des Ventilschafts 28, allgemein zum Außenumfang des Ventilschafts 28, bereitgestellt wird, kann das Gehäuse 18 immer so weit in Richtung auf die Felge 14 verschoben werden, bis das Gehäuse 18 an der Felge 14 anliegt. Der Ventilschaft 28 erstreckt sich dann durch die Durchgangsöffnung 42 im Gehäuse 18 hindurch. Je nach Ausbildung des Ventilschafts 28 kann sich dieser unterschiedlich weit über eine Oberseite des Gehäuses 18 hinaus erstrecken. Dies kann durch die spezielle Ausbildung des Zusatzventilschafts 20 ausgeglichen werden, der auf den Ventilschaft 28 aufgeschraubt wird, allgemein auf den Ventilschaft 28 aufgeschoben wird. Bei der in Fig. 3 dargestellten Ausführungsform ist das Innengewinde im Zusatzventilschaft 20 etwas länger als der Bereich des Ventilschafts 28, der über die Oberseite des Gehäuses 18 hinausragt. Der Zusatzventilschaft 20 kann infolgedessen immer so weit auf den Ventilschaft 28 aufgeschraubt werden, bis seine in Fig. 3 unten liegende Stirnfläche mit dem Dichtring 58 dichtend auf der Oberseite des Gehäuses 18 aufliegt. Durch das Aufschrauben des Zusatzventilschafts 20 wird das Gehäuse 18 gegen die Mutter 40 vorgespannt und der Dichtring 52 wird zusammengedrückt und gegen den Außenumfang des Ventilschafts 28 gepresst. Dadurch kann eine luftdichte Strömungsverbindung zwischen dem Inneren des Zweiradreifens 16 und einem Sensor 32 im Gehäuse 18 zum Erfassen eines Luftdrucks im Inneren des Zweiradreifens 16 bereitgestellt werden.

Im Rahmen der Erfindung kann der Sensor selbstverständlich auch am Gehäuse angeordnet sein. Wesentlich ist, dass ein gegen die Umgebung abgedichteter Luftkanal zwischen dem Inneren des Zweiradreifens und dem Sensor existiert.

Fig. 4 zeigt den Zusatzventilschaft 20 in einer Schnittansicht. Zu erkennen ist der Dichtring 58 in der in Fig. 4 unteren Stirnfläche des Zusatzventilschafts 20.

Weiter ist eine Nut zur Ausbildung des ersten Luftkanals 54 erkennbar, die im Innengewinde des Zusatzventilschafts 20 vorgesehen ist.

Fig. 5 zeigt eine Ansicht des Zusatzventilschafts 20 der Fig. 4 von unten. Zu erkennen ist, dass der erste Luftkanal 54 mittels einer rechteckförmigen Nut gebildet ist, die sich in Längsrichtung des Zusatzventilschafts 20 erstreckt und in das Innengewinde 60 im Zusatzventilschaft 20 eingebracht ist.

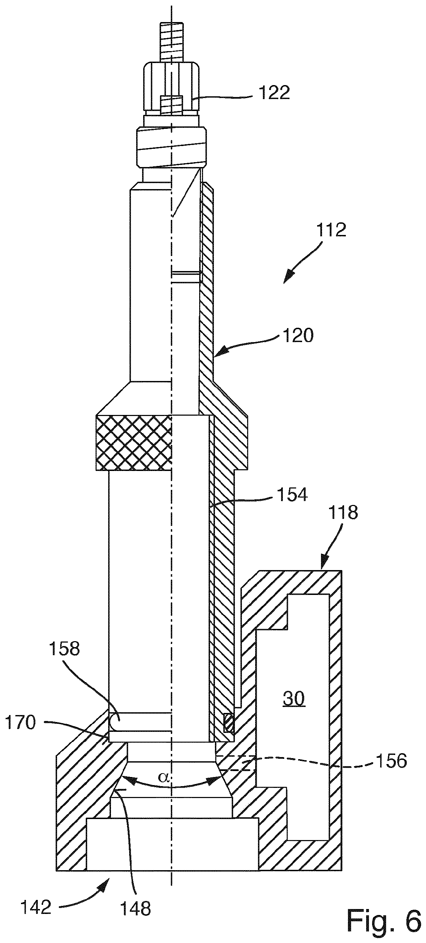

Fig. 6 zeigt eine Teilschnittansicht einer erfindungsgemäßen Vorrichtung 110 gemäß einer weiteren Ausführungsform. Die Vorrichtung 110 ist ohne eine Felge und ohne einen Ventilschaft dargestellt.

Die Vorrichtung 112 weist einen Zusatzventilschaft 120 auf und ein Gehäuse 118. Das Gehäuse 118 weist den Hohlraum 30 auf, der, wie bereits anhand der Fig. 2 erläutert wurde, zur Anordnung eines Sensors, einer Auswerteeinheit und gegebenenfalls eines Energiespeichers oder einer energy-harvesting-Einrichtung vorgesehen ist. Vom Hohlraum 30 geht ein Luftkanal 156 zu einer Durchgangsöffnung 142, die, wie bereits anhand der Fig. 1 bis 3 erläutert wurde, zum Aufnehmen eines in Fig. 6 nicht dargestellten Ventilschafts dient. Die Durchgangsöffnung 142 weist einen kegelstumpfförmigen Abschnitt 148 auf. Ein Öffnungswinkel α des kegelstumpfförmigen Abschnitts liegt bei der dargestellten Ausführungsform bei 50°. Ein solcher Öffnungswinkel α hat sich als besonders vorteilhaft herausgestellt und kommt auch bei dem kegelstumpfförmigen Abschnitt 48 gemäß Fig. 3 zum Einsatz.

Ein wesentlicher Unterschied zur Vorrichtung 18 der Fig. 1 bis 3 ist, dass der Zusatzventilschaft 120 gegenüber dem Gehäuse 118 in radialer Richtung abgedichtet wird. Ein Dichtring 158 ist an dem in Fig. 6 unteren Ende des Zusatzventilschafts 120 in einer umlaufenden Nut vorgesehen. Der Zusatzventilschaft 120 wird in einen von der Oberseite des Gehäuses 118 ausgehenden, zylindrischen Abschnitt 170 der Durchgangsöffnung 142 gesteckt, so dass der Dichtring 158 sich in radialer Richtung an den Innenumfang des Abschnitts 170 anschmiegt. Dadurch ist eine Verbindung zwischen dem Zusatzventilschaft 120 und dem Gehäuse 118 gegenüber der Umgebung abgedichtet.

Der Zusatzventilschaft 120 ist im Übrigen im Wesentlichen gleich wie der Zusatzventilschaft 20 der Fig. 1 bis 3 ausgebildet und weist u.a. auch eine Nut 154 zur Ausbildung eines ersten Luftkanals aus. In dem Zusatzventilschaft 120 ist an seinem in Fig. 6 oberen Ende ein Ventil 122 eingeschraubt.

Im Übrigen sind der Zusatzventilschaft 120 und das Gehäuse 118 funktionsgleich zu dem Zusatzventilschaft 20 und dem Gehäuse 18 der Fig. 1 bis 3 aufgebaut und werden auch nicht erneut erläutert. Wie bei der Vorrichtung 12 der Fig. 1 bis 3 wird zunächst die Mutter 40 auf den Ventilschaft 28 aufgeschraubt und mit dem Dichtring 52 versehen. Daraufhin wird das Gehäuse 118 auf die Felge 14 aufgesetzt, bis der kegelstumpfförmige Abschnitt 148 der Durchgangsöffnung 142 des Gehäuses 118 an dem Dichtring 52 anliegt. Dann wird der Zusatzventilschaft 120 auf den Ventilschaft 28 aufgeschraubt, bis der Zusatzventilschaft 120 die in Fig. 6 dargestellte Position relativ zum Gehäuse 118 einnimmt. Das Gehäuse 118 liegt dann mit seiner Unterseite auf der Felge 14 auf. Der Übersichtlichkeit halber sind in Fig. 6 weder die Felge 14, die Mutter 40 noch der Ventilschaft 28 dargestellt.

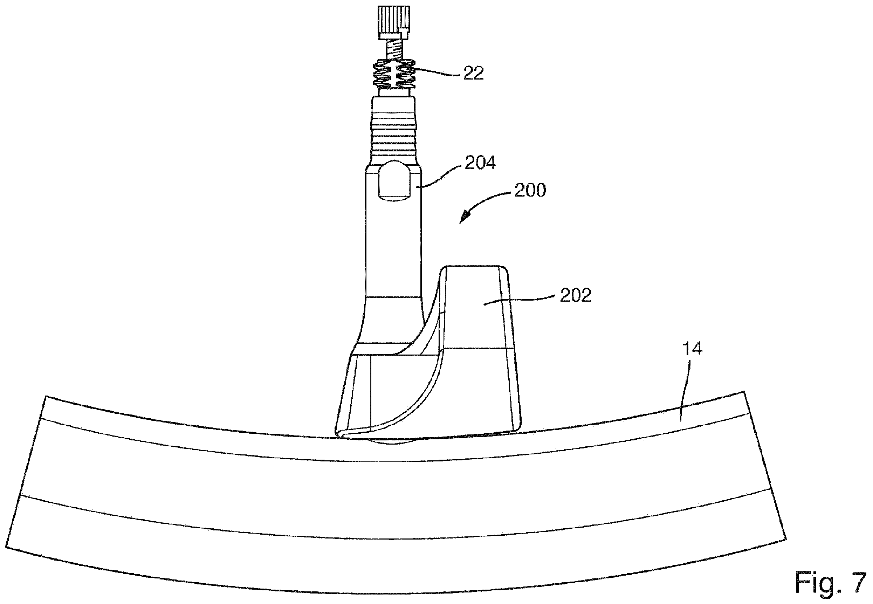

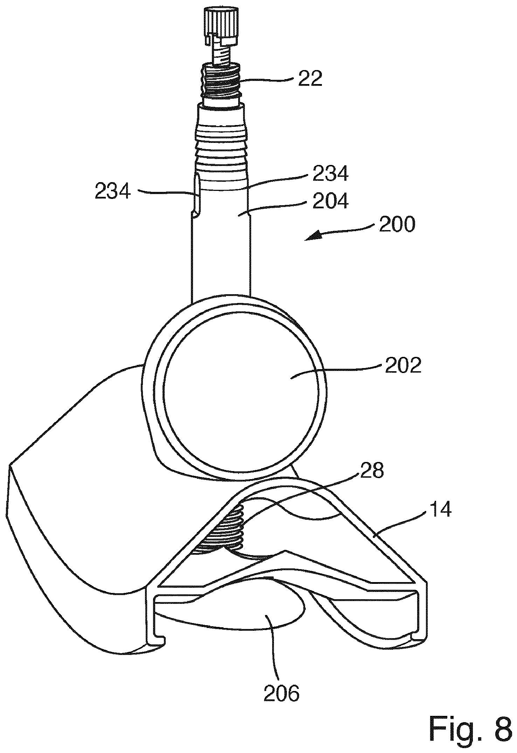

Fig. 7 und Fig. 8 zeigen eine abschnittsweise Darstellung einer erfindungsgemäßen Anordnung gemäß einer dritten Ausführungsform aus verschiedenen Blickrichtungen. Die Anordnung weist eine Vorrichtung 200 zum Messen des Luftdrucks im Inneren eines in Fig. 7 nicht dargestellten Zweiradreifens auf. Der Zweiradreifen ist aber auf einer Felge 14 in gleicher Weise wie anhand der vorherigen Ausführungsformen erkennbar, siehe speziell die Fig. 1 und 2, angeordnet. Die Vorrichtung 200 weist ein Gehäuse 202 und einen Zusatzventilschaft 204 auf. In das in Fig. 7 obere Ende des Zusatzventilschafts 204 ist ein konventionelles Ventil 22 eingeschraubt. In Fig. 7 nicht, in Fig. 8 aber zu erkennen ist ein Ventilschaft 28 des Zweiradreifens, auf den das Gehäuse 202 aufgeschoben ist und auf den der Zusatzventilschaft 204 aufgeschraubt ist, wie nachstehend noch erläutert wird.

In dem Gehäuse 202 ist, wie anhand der zuvor bereits erläuterten Ausführungsformen erläutert, ein Sensor zum Erfassen eines Luftdrucks in dem Zweiradreifen angeordnet. Weiter können in dem Gehäuse eine nicht dargestellte Steuer- und Auswerteeinheit sowie ein auswechselbarer Energiespeicher, beispielsweise eine Batterie, angeordnet sein. Mittels der Steuer- und Auswerteeinheit kann auch eine drahtlose Kommunikation zu einer Anzeigeeinheit, beispielsweise einem Mobiltelefon, erfolgen und/oder an dem Gehäuse 202 kann eine nicht dargestellte Anzeigeeinheit vorgesehen sein.

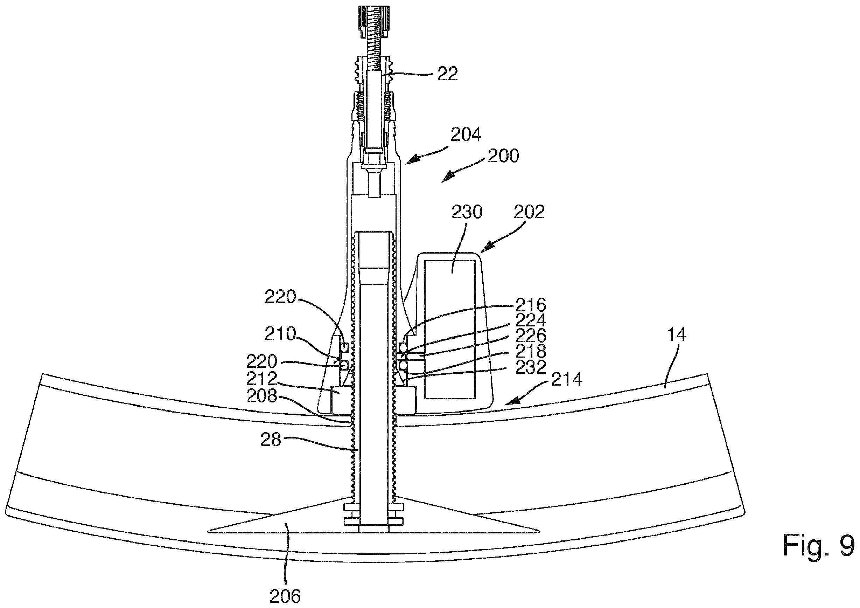

Fig. 9 zeigt eine Schnittansicht der Anordnung der Fig. 7, wobei eine Schnittebene durch eine Mittelebene der Felge 14 verläuft.

Zu erkennen ist in der Schnittansicht der Fig. 9 wieder die Vorrichtung 200 mit dem Gehäuse 202 und dem Zusatzventilschaft 204, in den das Ventil 22 eingeschraubt ist. Zu erkennen ist nun auch der Ventilschaft 28, der im Inneren der Felge 14 beginnt und an seinem, in Fig. 9 unterem Ende mit einem Ventilschaftfuß 206 versehen ist. Der Ventilschaftfuß 206 kann mit einem nicht dargestellten Schlauch eines Zweiradreifens verbunden sein, auf der Felge 14 kann aber auch ein schlauchloser Reifen montiert sein.

Der Ventilschaft 28 ist mit einem Außengewinde versehen und erstreckt sich durch eine Bohrung 208 auf einer radial innen liegenden Seite der Felge 14.

Das Gehäuse 202 weist eine Durchgangsöffnung 210 auf, durch die sich der Ventilschaft 28 hindurch erstreckt. Der Zusatzventilschaft 204 ist ebenfalls in die Durchgangsöffnung 210 des Gehäuses 202 eingesteckt. Auf den Ventilschaft 28 ist eine Mutter 212 aufgeschraubt, die mit ihrer Unterseite auf der Felge 14 aufliegt. Das Gehäuse 202 liegt mit einem Absatz der Durchgangsbohrung 210, die als Stufenbohrung ausgeführt ist, auf einer Oberseite der Mutter 212 auf. Der Absatz der Durchgangsöffnung 210 ist so ausgebildet und angeordnet, dass zwischen dem Gehäuse 202 und der in Fig. 9 oben liegenden Seite der Felge 14 ein sehr kleiner Spalt 214 mit einer Höhe von weniger als 0,5 mm liegt. Dieser Spalt 214 wird so klein gewählt, dass das Gehäuse 202 zwar noch um den Ventilschaft 28 drehbar ist, ohne an der Felge 14 anzustoßen, dass aber ein Verkippen des Gehäuses 202 nicht oder lediglich in sehr geringem Maß möglich ist. Dadurch ist sichergestellt, dass auch dann, wenn das Gehäuse 202 verkippt wird, beispielsweise in Fig. 9 im Uhrzeigersinn oder gegen den Uhrzeigersinn, der Ventilschaft 28 nicht so stark verformt wird, dass er verbogen oder beschädigt werden kann. Dies stellt sicher, dass beim Aufpumpen des Zweiradreifens der Ventilschaft 28 nicht versehentlich verbogen oder beschädigt wird. Die Anordnung des Gehäuses 202 anliegend an die Felge 14 oder in einem sehr geringen Abstand, entsprechend der Höhe des Spalts 214, von der Felge 14 stellt auch genügend Raum zwischen den in Fig. 9 nicht dargestellten Speichen der Felge 14 für die Anordnung der Vorrichtung 200 zur Verfügung.

In Fig. 9 ist weiter zu erkennen, dass der Zusatzventilschaft 204 an seinem in Fig. 9 unteren Ende, das in der Durchgangsbohrung 210 des Gehäuses 202 angeordnet ist, mit zwei umlaufenden Nuten 216, 218 versehen ist. In diesen Nuten 216, 218 ist jeweils ein Dichtring 220 angeordnet, der mit seiner radial außen liegenden Seite gegen die Innenwand der Durchgangsöffnung 210 des Gehäuses 202 gedrückt wird. Der Zusatzventilschaft 204 ist dadurch gegen die Durchgangsöffnung 210 des Gehäuses 202 abgedichtet.

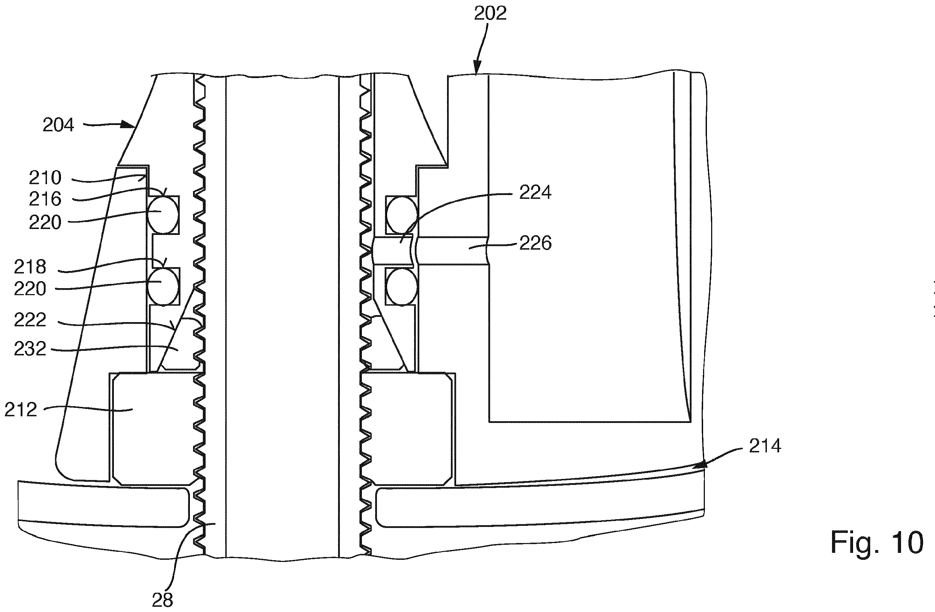

Der Zusatzventilschaft 204 weist an seinem in Fig. 9 unteren Ende, das ebenfalls in der Durchgangsbohrung 210 des Gehäuses 202 angeordnet ist, einen kegelstumpfförmigen und sich nach unten, zur Felge 14 hin erweiternden Abschnitt 222 auf, siehe auch Fig. 10. Zwischen der Innenwand dieses kegelstumpfförmigen Abschnitts 222 und dem Außengewinde des Ventilschafts 28 ist dadurch ein sich nach unten erweiternder Zwischenraum gebildet, der nach unten hin durch die Oberseite der Mutter 212 begrenzt wird. In diesem Zwischenraum ist ein weiterer Dichtring 232 angeordnet, der durch die Innenwand des kegelstumpfförmigen Abschnitts 222 nach unten gegen die Mutter 212 und nach innen gegen das Außengewinde des Ventilschafts 28 gedrückt wird. Der Dichtring 232 stellt somit eine Abdichtung zwischen dem Außengewinde des Ventilschafts 28 und dem Zusatzventilschaft 204 bereit.

Das Innere des in Fig. 9 nicht dargestellten Zweiradreifens steht somit in Strömungsverbindung mit der Durchgangsbohrung im Ventilschaft 28. Die Durchgangsbohrung im Ventilschaft 28 steht wiederum mit der Durchgangsbohrung im Zusatzventilschaft 204 in Verbindung. Über das Ventil 22 kann somit der Zweiradreifen aufgepumpt werden oder es kann Luft aus dem Zweiradreifen abgelassen werden. Der Luftdruck im Inneren des Zweiradreifens herrscht somit auch in der Durchgangsbohrung des Zusatzventilschaft 204 und speziell in dem Bereich zwischen dem in Fig. 9 oberen Ende des Ventilschafts 28 und dem unteren Ende des Ventils 22. Zwischen einem Innengewinde des Zusatzventilschafts 204, der auf das Außengewinde des Ventilschafts 28 aufgeschraubt ist, und dem Außengewinde des Ventilschafts 28 liegt ein erster Luftkanal. Dieser erste Luftkanal kann durch Spiel zwischen dem Außengewinde des Ventilschafts 28 und dem Innengewinde des Zusatzventilschafts 204 gebildet sein. Das Innengewinde des Zusatzventilschafts 204 kann auch durch eine in Längsrichtung des Zusatzventilschafts 204 verlaufende Nut unterbrochen sein, in Fig. 9 also von oben nach unten, um einen definierten ersten Luftkanal zur Verfügung zu stellen. Dieser erste Luftkanal läuft bis zu einer Radialbohrung 224 im Zusatzventilschaft 204, die zwischen den beiden Nuten 216, 218 angeordnet ist. Die Radialbohrung 224 fluchtet mit einer Radialbohrung 226 im Gehäuse 202, wobei die Bohrungen 224, 226 nicht notwendigerweise fluchten müssen, um in Strömungsverbindung zu stehen. Die Bohrungen 224, 226 stellen dadurch einen zweiten Luftkanal bereit, der in einen Innenraum 230 des Gehäuses 202 führt. In dem Innenraum 230 des Gehäuses 202 kann dann ein Drucksensor angeordnet sein, um den Druck im Inneren des Zweiradreifens zu erfassen.

In Fig. 9 nach oben und unten hin ist dieser zweite Luftkanal und somit die Bohrungen 224, 226 mittels der beiden Dichtringe 220 abgedichtet, die einerseits in den Nuten 216, 218 des Zusatzventilschafts 204 liegen und andererseits gegen die Durchgangsbohrung 210 im Gehäuse 202 gedrückt werden. Ausgehend von der Bohrung 224 nach unten hin, also in Richtung auf die Felge 14, ist ein Zwischenraum zwischen der Durchgangsbohrung im Zusatzventilschaft 204 und dem Außengewinde des Ventilschafts 28 mittels des Dichtrings 232 abgedichtet. Luft aus dem Inneren des Zweiradreifens kann somit auch nicht in Fig. 9 nach unten hin entweichen. Eine zuverlässige Abdichtung wird mittels des Dichtrings 232 dabei dadurch sichergestellt, dass der kegelstumpfförmige Abschnitt 222 des Zusatzventilschafts 204 den Dichtring 232 dadurch nach innen gegen das Außengewinde des Ventilschafts 28 und nach unten gegen die Oberseite der Mutter 212 drückt. Der Dichtring 232 kann somit nicht ausweichen und kann somit für eine zuverlässige Abdichtung sorgen.

In der vergrößerten Einzelheit aus Fig. 9 in Fig. 10 ist zu erkennen, dass zwischen der Radialbohrung 224 im Zusatzventilschaft 204 und der Radialbohrung 226 im Gehäuse 202 in radialer Richtung ein geringer Spalt liegt. Dadurch wird ein Ringraum gebildet, der sich um den Umfang des Zusatzventilschafts 204 erstreckt. Um eine Strömungsverbindung zwischen der Radialbohrung 224 im Zusatzventilschaft 204 und der Radialbohrung 226 im Gehäuse 202 bereitzustellen, ist es somit nicht erforderlich, dass die Radialbohrungen 224, 226 fluchtend zueinander ausgerichtet sind. Es ist vielmehr möglich, das Gehäuse 202 relativ zum Zusatzventilschaft 204 und damit auch relativ zur Felge 214 zu verdrehen. Dies kann nützlich sein, um eine optimale Ausrichtung des Gehäuses 202 relativ zur Felge wählen zu können. Dies kann aus aerodynamischen Gründen zum Schutz des Gehäuses 202 vor mechanischer Beschädigung, zur Sicherstellung einer optimalen drahtlosen Datenübertragung zum Gehäuse und vom Gehäuse und/oder sonstigen Gründen wesentlich sein.

Darüber hinaus kann auch eine Diebstahlsicherung dadurch bereitgestellt werden, dass das Gehäuse 202 relativ zum Zusatzventilschaft 204 verdreht werden kann, ohne dass der Zusatzventilschaft 204 dadurch relativ zum Ventilschaft 28 gedreht wird. Der Zusatzventilschaft 204 ist darüber hinaus in seinem, für die Finger einer menschlichen Hand zugänglichen Bereich glatt ausgebildet. Der Zusatzventilschaft 204 kann somit nicht von Hand und ohne Zuhilfenahme von Werkzeug von dem Ventilschaft 28 heruntergeschraubt werden.

Der Zusatzventilschaft 204 ist vielmehr, siehe Fig. 8, mit einander gegenüberliegenden Abflachungen 234 versehen, an denen mittels eines Gabelschlüssels angegriffen werden kann. Nur mittels eines passenden Gabelschlüssels ist es dadurch möglich, den Zusatzventilschaft 204 vom Ventilschaft 28 herunterzuschrauben und dadurch auch die Vorrichtung 200 zu demontieren.

In dem Innenraum 230 des Gehäuses 202 kann, wie ausgeführt wurde, eine Steuer- und Auswerteeinheit vorgesehen sein, die unter anderem auch eine Sendeeinheit aufweisen kann, um den gemessenen Luftdruck zu einer Anzeigeeinheit zu übertragen. Eine solche Übertragung kann drahtlos erfolgen, beispielsweise zu einem Mobiltelefon eines Benutzers oder einer Anzeigeeinheit am Lenker des Zweirades. In dem Innenraum 230 des Gehäuses kann auch ein auswechselbarer Energiespeicher vorgesehen sein, im einfachsten Fall beispielsweise eine Batterie, die in das Gehäuse 202 eingesetzt und dann beispielsweise mittels eines Clipses oder eines Verschlussstopfens gesichert wird.

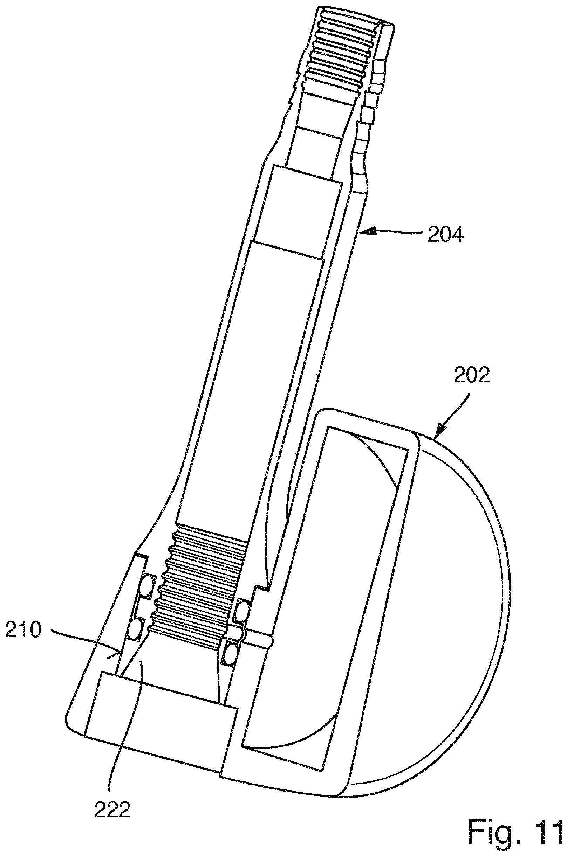

Die Darstellung der Fig. 11 zeigt in einer Schnittansicht lediglich den Zusatzventilschaft 204 und das Gehäuse 202. Gut zu erkennen ist die als Stufenbohrung ausgebildete Durchgangsbohrung 210 im Gehäuse 202 sowie auch der kegelstumpfförmige Abschnitt 222 an dem Ende des Zusatzventilschafts 204, der im montierten Zustand der Felge zugewandt ist.

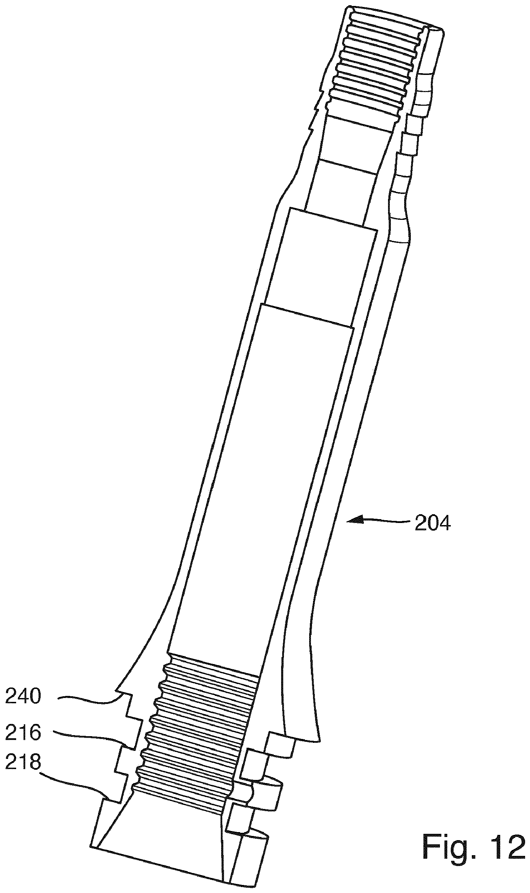

Fig. 12 zeigt den Zusatzventilschaft 204 der Fig. 11 ohne das Gehäuse 202. Zu erkennen sind die Nuten 216 und 218, in denen dann Dichtringe angeordnet werden, um den Zusatzventilschaft 204 gegen das Gehäuse 202 abzudichten. Die Nuten laufen um den Umfang des Zusatzventilschafts 204 um, so dass das Gehäuse 202 gedreht werden kann, ohne dass eine Abdichtung zwischen Gehäuse 202 und Zusatzventilschaft 204 verloren geht.

Eine Einstecktiefe des Zusatzventilschafts 204 in die Durchgangsbohrung 210 des Gehäuses 202 wird dabei nicht mittels eines Absatzes 240 am Zusatzventilschaft 204 begrenzt.lm montierten Zustand der Vorrichtung, siehe Fig. 9 und Fig. 10, liegt der Absatz 240 nicht auf einer Oberseite des Gehäuses 202 auf, sondern ist in geringerem Abstand von der Oberseite des Gehäuses 202 angeordnet. Das Gehäuse 202 lässt sich relativ zum Zusatzventilschaft 204 verdrehen, ohne dass dadurch der Zusatzventilschaft 204 relativ zum Ventilschaft verdreht und gelockert oder gelöst wird. In Verbindung mit der glatten Außenseite des Zusatzventilschafts 204 wird dadurch eine Diebstahlsicherung bereitgestellt, da sich der Zusatzventilschaft 204 nicht ohne Zuhilfenahme von Werkzeug vom Ventilschaft abschrauben lässt. Die Einstecktiefe des Zusatzventilschafts 204 ist durch das in Fig. 12 links unten liegende Ende des Zusatzventilschafts 204 bestimmt, das, siehe Fig. 10, auf der Mutter 212 oder Buchse aufliegt. Im montierten Zustand liegt somit zwischen dem Absatz 240 und dem Gehäuse 202 ein kleiner Spalt. Das Gehäuse 202 ist damit relativ zum Zusatzventilschaft 204 und zum Ventilschaft drehbar, ohne den Zusatzventilschaft 204 zu lösen.

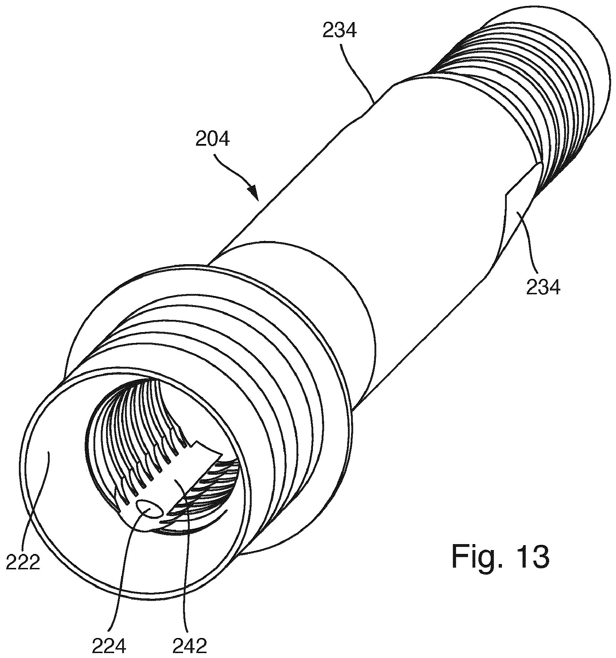

Fig. 13 zeigt den Zusatzventilschaft 204 in einer Ansicht von schräg unten. Zu erkennen ist der kegelstumpfförmige Abschnitt 222 sowie der Beginn der Radialbohrung 224. Das Innengewinde des Zusatzventilschafts 204 ist dabei mittels einer Nut 242 über einen kleinen Abschnitt des Umfangs unterbrochen, um einen Abschnitt des ersten Luftkanals zu bilden, der dann in den zweiten Luftkanal bzw. die Radialbohrung 224 mündet.

In Fig. 13 sind auch die beiden Abflachungen 234 an der Außenseite des Zusatzventilschafts 204 zu erkennen, an denen ein Gabelschlüssel angesetzt werden kann.

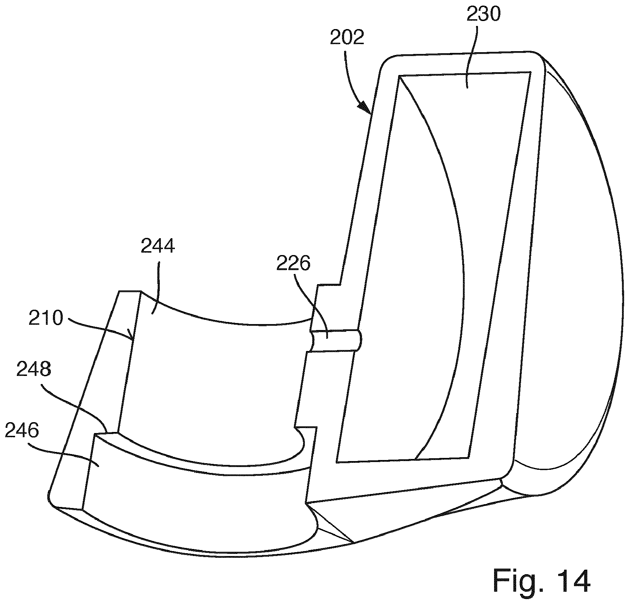

Fig. 14 zeigt eine Schnittansicht lediglich des Gehäuses 202. Gut zu erkennen ist die als Stufenbohrung ausgebildete Durchgangsbohrung 210 mit einem ersten Abschnitt 244, in dem das in Fig. 9 und Fig. 10 untere Ende des Zusatzventilschafts 204 mit den Nuten 216, 218 und dem kegelstumpfförmigen Abschnitt 222 angeordnet wird. Darüber hinaus folgt, im montierten Zustand in Richtung auf die Felge 14 zu, ein zweiter zylindrischer Abschnitt 246 mit gegenüber dem ersten Abschnitt 244 größeren Durchmesser. Der dadurch in der Durchgangsbohrung 210 gebildete Absatz 248 liegt auf der Oberseite der Mutter 212 auf, siehe Fig. 9 und Fig. 10 und legt dadurch die Position des Gehäuses 202 in axialer Richtung des Ventilschafts 28 fest. Der zweite Abschnitt 246 nimmt die Mutter 212 abschnittsweise auf und ist geringfügig niedriger als die Mutter 212 ausgeführt, so dass, wie ausgeführt wurde und in Fig. 9 und Fig. 10 dargestellt ist, ein sehr geringer Spalt 214 zwischen der Unterseite des Gehäuses 202 und der Oberseite der Felge 14 liegt. Wie ausgeführt, soll dieser Spalt 214 eine Höhe von 0,5 mm oder weniger haben, insbesondere 0,1 mm bis 0,2 mm.

In Fig. 14 ist weiter die Radialbohrung 226 des Gehäuses 202 zu erkennen, die in den Innenraum 230 des Gehäuses 202 führt. Der Innenraum 230 des Gehäuses 202 ist lediglich schematisch dargestellt. Es können mehrere, auch luftdicht voneinander getrennte Abteile in dem Innenraum 230 vorgesehen sein, wie ausgeführt wurde zur Anbringung eines Drucksensors, zur Anbringung einer Steuer- und Auswerteeinheit, gegebenenfalls mit Sendeeinheit, sowie zur Anbringung eines auswechselbaren Energiespeichers. Eine in Fig. 14 nicht dargestellte Anzeigeeinheit, beispielsweise eine oder mehrere LEDs, können am oder im Gehäuse 202 angeordnet werden. Sind eine oder mehrere LEDs im Gehäuse 202 angeordnet, kann das Gehäuse 202 wenigstens abschnittsweise transparent ausgeführt sein.

## Patentansprüche

1. Vorrichtung (12) zum Messen des Luftdrucks im Inneren eines Zweiradreifens, der auf einer Felge montiert ist, mit einem Gehäuse (18), einem Sensor (32) und einem Zusatzventilschaft (20), wobei der Zusatzventilschaft zum Befestigen an einem Ventilschaft (28) des Zweiradreifens vorgesehen ist, **dadurch gekennzeichnet, dass** das Gehäuse eine Durchgangsöffnung (42) zum Durchführen eines Ventilschafts des Zweiradreifens aufweist, wobei das Gehäuse und der Zusatzventilschaft so ausgebildet und angeordnet sind, dass sich der Ventilschaft durch die Durchgangsöffnung des Gehäuses hindurcherstrecken kann, dass im Bereich der Durchgangsöffnung des Gehäuses wenigstens eine Dichtung (52) vorgesehen ist, um zwischen dem Gehäuse und dem Ventilschaft eine Abdichtung bereitzustellen, und dass die Dichtung ausgebildet ist, im Bereich eines Außengewindes des Ventilschafts an dem Ventilschaft anzuliegen.

2. Vorrichtung nach Anspruch 1, **dadurch gekennzeichnet, dass** das Gehäuse, bezogen auf einen Bereich der Felge, in dem der Ventilschaft angeordnet ist, so ausgebildet und angeordnet ist, dass im montierten Zustand der Vorrichtung das Gehäuse wenigstens abschnittsweise an der Felge anliegt oder wenigstens abschnittsweise lediglich ein Spalt von 0,5mm Höhe oder weniger, insbesondere 0,1mm bis 0,2mm, zwischen dem Gehäuse und der Felge liegt.

3. Vorrichtung nach einem der vorstehenden Ansprüche, **dadurch gekennzeichnet, dass** der Zusatzventilschaft im montierten Zustand der Vorrichtung auf dem Gehäuse aufsitzt, wobei zwischen dem Zusatzventilschaft und dem Gehäuse eine Dichtung angeordnet ist, die das Gehäuse zum Zusatzventilschaft abdichtet.

4. Vorrichtung nach Anspruch 3, **dadurch gekennzeichnet, dass** eine Abdichtung zwischen dem Zusatzventilschaft und dem Gehäuse in radialer Richtung erfolgt.

5. Vorrichtung nach Anspruch 4, **dadurch gekennzeichnet, dass** ein Dichtring am Umfang des Zusatzventilschafts angeordnet ist, der sich in radialer Richtung an das Gehäuse anschmiegt.

6. Vorrichtung nach wenigstens einem der vorstehenden Ansprüche, **dadurch gekennzeichnet, dass** der Zusatzventilschaft einen ersten Luftkanal aufweist, der sich im montierten Zustand der Vorrichtung vom offenen Ende des Ventilschafts bis zu einem Bereich des Zusatzventilschafts erstreckt, der im montierten Zustand der Vorrichtung an dem Gehäuse anliegt.

7. Vorrichtung nach Anspruch 6, **dadurch gekennzeichnet, dass** das Gehäuse einen zweiten Luftkanal aufweist, der im montierten Zustand der Vorrichtung in Strömungsverbindung mit dem ersten Luftkanal steht.

8. Vorrichtung nach wenigstens einem der vorstehenden Ansprüche, **dadurch gekennzeichnet, dass** die Durchgangsöffnung im Gehäuse als Stufenbohrung ausgebildet ist, um eine auf den Ventilschaft aufgeschraubte oder aufgeschobene Mutter wenigstens abschnittsweise aufzunehmen und einen Dichtsitz für einen Dichtring zu bilden.

9. Vorrichtung nach wenigstens einem der vorstehenden Ansprüche, **dadurch gekennzeichnet, dass** der Sensor in dem Gehäuse angeordnet ist und der zweite Luftkanal mit dem Sensor in Strömungsverbindung steht.

10. Vorrichtung nach wenigstens einem der vorstehenden Ansprüche, **dadurch gekennzeichnet, dass** der Zusatzventilschaft auf seiner Außenseite glatt ausgebildet ist, so dass der Zusatzventilschaft im montierten Zustand nicht ohne Zuhilfenahme von Werkzeug vom Ventilschaft entfernt werden kann.

11. Anordnung mit einer Vorrichtung (12) zum Messen des Luftdrucks, einer Felge (14), einem auf einer Felge montierten Zweiradreifen (16) und einem Ventilschaft (28) zum Befüllen des Zweiradreifens, wobei der Ventilschaft von einer radial innen liegenden Seite der Felge aus in radialer Richtung nach innen vorragt, und wobei die Vorrichtung ein Gehäuse (18) einen Sensor (32) und einen Zusatzventilschaft (20) zum Befestigen an dem Ventilschaft aufweist **dadurch gekennzeichnet, dass** das Gehäuse eine Durchgangsöffnung (42) zum Durchführen des Ventilschafts aufweist, wobei das Gehäuse und der Zusatzventilschaft so ausgebildet und angeordnet sind, dass sich der Ventilschaft durch die Durchgangsöffnung des Gehäuses hindurcherstreckt und dass im Bereich der Durchgangsöffnung des Gehäuses zwischen dem Gehäuse und dem Ventilschaft wenigstens eine Dichtung (52) angeordnet ist
und dass die Dichtung ausgebildet ist, im Bereich eines Außengewindes des Ventilschafts an dem Ventilschaft anzuliegen.

12. Anordnung nach Anspruch 11, **dadurch gekennzeichnet, dass** das Gehäuse, bezogen auf einen Bereich der Felge, in dem der Ventilschaft angeordnet ist, im montierten Zustand wenigstens abschnittsweise an der Felge anliegt oder wenigstens abschnittsweise lediglich ein Spalt von 0,5mm Höhe oder weniger, insbesondere 0,1mm bis 0,2mm, zwischen dem Gehäuse und der Felge liegt.

13. Anordnung nach Anspruch 11 oder 12, **dadurch gekennzeichnet, dass** eine Abdichtung zwischen dem Zusatzventilschaft und dem Gehäuse in radialer Richtung erfolgt, wobei insbesondere ein Dichtring am Umfang des Zusatzventilschafts angeordnet ist und sich in radialer Richtung an das Gehäuse anschmiegt.

14. Anordnung nach wenigstens einem der vorstehenden Ansprüche 11 bis 13, **dadurch gekennzeichnet, dass** der Ventilschaft ein Außengewinde aufweist und der Zusatzventilschaft ein Innengewinde aufweist und auf den Ventilschaft aufgeschraubt ist.

15. Anordnung nach wenigstens einem der vorstehenden Ansprüche 11 bis 14, **dadurch gekennzeichnet, dass** das Gehäuse relativ zum Zusatzventilschaft verdreht werden kann.

## Claims

1. A device (12) for measuring the air pressure in the interior of a two-wheeler tire fitted on a rim, having a housing (18), a sensor (32) and an additional valve stem (20), wherein the additional valve stem is provided for fastening to a valve stem (28) of the two-wheeler tire, **characterized in that** the housing has a passage opening (42) to be passed through by a valve stem of the two-wheeler tire, wherein the housing and the additional valve stem are designed and arranged such that the valve stem can extend through the passage opening of the housing, **in that** at least one gasket (52) is provided in the area of the passage opening of the housing to ensure sealing between the housing and the valve stem, and **in that** the gasket is designed to be in contact with the valve stem in the area of an external thread of the valve stem.

2. The device according to claim 1, **characterized in that** the housing is designed and arranged, relative to an area of the rim in which the valve stem is arranged, such that in the fitted state of the device, the housing is in contact with the rim at least in some sections, or such that there is only a gap of 0.5mm or less in height, in particular 0.1mm to 0.2mm, between the housing and the rim at least in some sections.

3. The device according to any of the above claims, **characterized in that** in the fitted state of the device, the additional valve stem is seated on the housing, wherein a gasket is arranged between the additional valve stem and the housing that seals off the housing from the additional valve stem.

4. The device according to claim 3, **characterized in that** sealing between the additional valve stem and the housing is in the radial direction.

5. The device according to claim 4, **characterized in that** a sealing ring which hugs the housing in the radial direction is arranged at the circumference of the additional valve stem.

6. The device according to at least one of the above claims, **characterized in that** the additional valve stem has a first air duct which, in the fitted state of the device, extends from the open end of the valve stem to an area of the additional valve stem which is in contact with the housing in the fitted state of the device.

7. The device according to claim 6, **characterized in that** the housing has a second air duct which, in the fitted state of the device, is in is in fluid communication with the first air duct.

8. The device according to at least one of the above claims, **characterized in that** the passage opening in the housing is designed as a stepped bore, in order to receive a nut screwed or slid onto the valve stem at least in some sections and to form a seat for a sealing ring.

9. The device according to at least one of the above claims, **characterized in that** the sensor is arranged in the housing and the second air duct is in fluid communication with the sensor.

10. The device according to at least one of the above claims, **characterized in that** the additional valve stem is designed smooth on its exterior, such that in the fitted state, the additional valve stem cannot be removed from the valve stem without the assistance of a tool.

11. An arrangement having a device (12) for measuring the air pressure, a rim (14), a two-wheeler tire (16) fitted on a rim, and a valve stem (28) for inflating the two-wheeler tire, wherein the valve stem projects from a radially inner side of the rim inwards in the radial direction, and wherein the device has a housing (18), a sensor (32) and an additional valve stem (20) for fastening to the valve stem, **characterized in that** the housing has a passage opening (42) to be passed through by the valve stem, wherein the housing and the additional valve stem are designed and arranged such that the valve stem extends through the passage opening of the housing, and **in that** at least one gasket (52) is arranged in the area of the passage opening of the housing between the housing and the valve stem, and **in that** the gasket is designed to be in contact with the valve stem in the area of an external thread of the valve stem.

12. The arrangement according to claim 11, **characterized in that** in the fitted state, the housing is in contact with the rim, relative to an area of the rim in which the valve stem is arranged, at least in some sections or there is only a gap of 0.5mm or less in height, in particular 0.1mm to 0.2mm, between the housing and the rim at least in some sections.

13. The arrangement according to claim 11 or 12, **characterized in that** sealing between the additional valve stem and the housing is in the radial direction, wherein in particular a sealing ring is arranged on the circumference of the additional valve and hugs the housing in the radial direction.

14. The arrangement according to at least one of the above claims 11 to 13, **characterized in that** the valve stem has an external thread, and the additional valve stem has an internal thread and is screwed onto the valve stem.

15. The arrangement according to at least one of the above claims 11 to 14, **characterized in that** the housing can be rotated relative to the additional valve stem.

## Revendications

1. Appareil (12) pour mesurer la pression d'air à l'intérieur d'un pneu de deux-roues qui est monté sur une jante, avec un boîtier (18), un capteur (32) et un corps de valve supplémentaire (20), sachant que le corps de valve supplémentaire est prévu pour être fixé sur un corps de valve (28) du pneu de deux-roues, **caractérisé en ce que** le boîtier présente un orifice de traversée (42) pour introduire un corps de valve du pneu de deux-roues, sachant que le boîtier et le corps de valve supplémentaire sont conçus et disposés de sorte que le corps de valve peut s'étendre à travers l'orifice de traversée du boîtier, que dans la zone de l'orifice de traversée du boîtier est prévu au moins un joint (52) pour fournir un étanchement entre le boîtier et le corps de valve, et que le joint est conçu pour reposer sur le corps de valve dans la zone du filetage extérieur du corps de valve.

2. Appareil selon la revendication 1, **caractérisé en ce que**, par rapport à une zone de la jante, dans laquelle le corps de valve est disposé, le boîtier est conçu et disposé de sorte qu'à l'état monté de l'appareil, le boîtier repose au moins partiellement sur la jante ou qu'au moins partiellement, seul un interstice d'une hauteur de 0,5 mm ou moins, notamment d'une hauteur comprise entre 0,1 mm et 0,2 mm, se trouve entre le boîtier et la jante.

3. Appareil selon l'une des revendications précédentes, **caractérisé en ce qu'**à l'état monté de l'appareil, le corps de valve supplémentaire repose sur le boîtier, sachant qu'est disposé entre le corps de valve supplémentaire et le boîtier, un joint qui rend étanche la jonction entre le boîtier et le corps de valve supplémentaire.

4. Appareil selon la revendication 3, **caractérisé en ce qu'**un étanchement entre le corps de valve supplémentaire et le boîtier a lieu en sens radial.

5. Appareil selon la revendication 4, **caractérisé en ce qu'**est disposée sur la circonférence du corps de valve une bague d'étanchéité qui épouse le boîtier dans le sens radial.

6. Appareil selon au moins l'une des revendications précédentes, **caractérisé en ce que** le corps de valve supplémentaire présente un premier conduit d'air qui, dans l'état monté de l'appareil, s'étend de l'extrémité ouverte du corps de valve à une zone du corps de valve supplémentaire qui épouse le boîtier à l'état monté de l'appareil.

7. Appareil selon la revendication 6, **caractérisé en ce que** le boîtier présente un second conduit d'air qui se trouve en liaison fluidique avec le premier conduit d'air, dans l'état monté de l'appareil.

8. Appareil selon au moins l'une des revendications précédentes, **caractérisé en ce que** l'orifice de traversée dans le boîtier est conçu sous forme de perçage étagé pour accueillir au moins partiellement un écrou vissé ou enfilée sur le corps de valve et former un siège d'étanchéité pour une bague d'étanchéité.

9. Appareil selon au moins l'une des revendications précédentes, **caractérisé en ce que** le capteur est disposé dans le boîtier et que le second conduit d'air est en liaison fluidique avec le capteur.

10. Appareil selon au moins l'une des revendications précédentes, **caractérisé en ce que** le corps de valve supplémentaire est conçu de sorte à être lisse sur sa face extérieure de sorte que le corps de valve supplémentaire à l'état monté ne peut pas être retiré du corps de valve sans l'aide d'un outil.

11. Agencement avec un appareil (12) pour mesurer la pression d'air, une jante (14), un pneu de deux-roues (16) monté sur une jante et un corps de valve (28) pour remplir le pneu de deux-roues, sachant que le corps de valve dépasse, vers l'intérieur, d'un côté situé radialement à l'intérieur, de la jante dans le sens radial, et sachant que l'appareil présente un boîtier (18), un capteur (32) et un corps de valve supplémentaire (20) pour fixer sur le corps de valve, **caractérisé en ce que** le boîtier présente un orifice de traversée (42) pour introduire le corps de valve, sachant que le boîtier et le corps de valve sont conçus et disposés de sorte à ce que le corps de valve s'étende à l'intérieur de l'orifice de traversée du boîtier et qu'au moins un joint (52) est disposé dans la zone de l'orifice de traversée du boîtier entre le boîtier et le corps de valve, et que le joint est conçu pour reposer sur le corps de valve dans la zone d'un filetage extérieur du corps de valve.

12. Agencement selon la revendication 11, **caractérisé en ce que**, par rapport à une zone de la jante, dans laquelle le corps de valve est disposé, le boîtier repose à l'état monté au moins partiellement sur la jante ou qu'au moins partiellement, seul un interstice d'une hauteur de 0,5 mm ou moins, notamment d'une hauteur comprise entre 0,1 mm et 0,2 mm, se trouve entre le boîtier et la jante.

13. Agencement selon la revendication 11 ou 12, **caractérisé en ce qu'**un étanchement a lieu entre le corps de valve et le boîtier dans le sens radial, sachant que notamment une bague d'étanchéité est disposée sur la circonférence du corps de valve supplémentaire et épouse le boîtier dans le sens radial.

14. Agencement selon au moins l'une des revendications 11 à 13 précédentes, **caractérisé en ce que** le corps de valve présente un filetage extérieur et que le corps de valve supplémentaire présente un filetage intérieur et est vissé sur le corps de valve.

15. Agencement selon au moins l'une des revendications 11 à 14 précédentes, **caractérisé en ce que** le boîtier peut être tourné par rapport au corps de valve supplémentaire.
